# EUROPEAN PATENT APPLICATION

(11) **EP 4 679 857 A1**
(43) Date of publication of application: **14.01.2026**
(21) Application number: 24766728.0
(22) Date of filing: 01.02.2024
(51) Int. Cl.: H04Q 9/00

(54) **DELAY DETECTION METHOD, DELAY DETECTION DEVICE, AND PROGRAM**

(30) Priority: 09.03.2023 US 202363451095 P
(71) Applicant: Panasonic Intellectual Property Management Co., Ltd., Kadoma-shi, Osaka 571-0057 (JP)
(72) Inventor: ANABUKI, Motoshi, Kadoma-shi, Osaka 571-0057 (JP); JOHN, Stephen William, Kadoma-shi, Osaka 571-0057 (JP); SHIMOTSUMA, Yuta, Kadoma-shi, Osaka 571-0057 (JP); KUHARA, Shunsuke, Kadoma-shi, Osaka 571-0057 (JP); HONDA, Yoshimasa, Kadoma-shi, Osaka 571-0057 (JP)
(74) Representative: Novagraaf International SA
(86) International application number: PCT/JP2024/003276
(87) International publication number: WO 2024/185353

(57) **Abstract**

A delay detection method, which is a delay detection method to be executed by a mobile body that is remotely controllable by an operator, includes: adding first time information to mobile body information indicating a state of the mobile body (10), and transmitting, to a terminal (30) of the operator, the mobile body information to which the first time information has been attached (S2); receiving an operation signal that includes details of remote control performed by the operator in response to the mobile body information, the operation signal including second time information that is based on the first time information included in the mobile body information (S6); and detecting a delay in a remote control system including the mobile body (10) and the terminal (30), based on the second time information and a predetermined time (S7).

## Description

### [Technical Field]

The present disclosure relates to a delay detection method, a delay detection device, and a program.

### [Background Art]

In recent years, unmanned transportation solutions using self-driving vehicles have been drawing attention. In addition to such transportation featuring self-driving, transportation services using vehicles capable of full remote control are also drawing attention from the viewpoint of labor-saving.

In such vehicles, achieving driving-automation level 4 (Lv4), which does not require human intervention, is currently still difficult. For now, allowing human intervention via remote operation as necessary is under consideration. Remote operation inevitably involves signal exchange over an unstable network such as a wireless network, thus requiring safety measures against network disconnection or delays.

Patent Literature (PTL) 1 discloses a system in which the occurrence of a communication delay is determined between an industrial vehicle and a remote operation device used to remotely operate the industrial vehicle. The industrial vehicle includes a vehicle communicator for wireless communication, and the remote operation device includes a remote communicator for wireless communication with the vehicle communicator.

### [Citation List]

### [Patent Literature]

[PTL 1] Japanese Patent No. 6943143

### [Summary of Invention]

### [Technical Problem]

Unfortunately, the technique in Patent Literature 1 cannot monitor a delay in the system as a whole. This is because the technique relies on a delay corresponding to the difference between a reception period required for the vehicle communicator to receive multiple remote operation signals and a generation period required to generate the remote operation signals. In remote operation, however, monitoring a delay in the system as a whole is desired at times.

In view of this, the present disclosure provides a delay detection method, a delay detection device, and a program that are capable of more accurately monitoring a delay in a system as a whole.

### [Solution to Problem]

A delay detection method according to an aspect of the present disclosure is a delay detection method to be executed by a mobile body that is remotely controllable by an operator. The delay detection method includes: adding first time information to mobile body information indicating a state of the mobile body, and transmitting, to a terminal of the operator, the mobile body information to which the first time information has been attached; receiving an operation signal that is based on an operation performed by the operator on the mobile body in response to the mobile body information, the operation signal including second time information that is based on the first time information included in the mobile body information; and detecting a delay in a remote control system including the mobile body and the terminal, based on the second time information and a predetermined time.

A delay detection device according to an aspect of the present disclosure is a delay detection device included in a mobile body that is remotely controllable by an operator. The delay detection device includes: a transmitter that adds first time information to mobile body information indicating a state of the mobile body, and transmits, to a terminal of the operator, the mobile body information to which the first time information has been attached; a receiver that receives an operation signal that is based on an operation performed by the operator on the mobile body in response to the mobile body information, the operation signal including second time information that is based on the first time information included in the mobile body information; and a determiner that detects a delay in a remote control system including the mobile body and the terminal, based on the second time information and a predetermined time.

A program according to an aspect of the present disclosure is a program for causing a computer to execute the above-described delay detection method.

### [Advantageous Effects of Invention]

An aspect of the present disclosure can realize a delay detection method, and so on, capable of more accurately monitoring a delay in a system as a whole.

### [Brief Description of Drawings]

[FIG. 1]

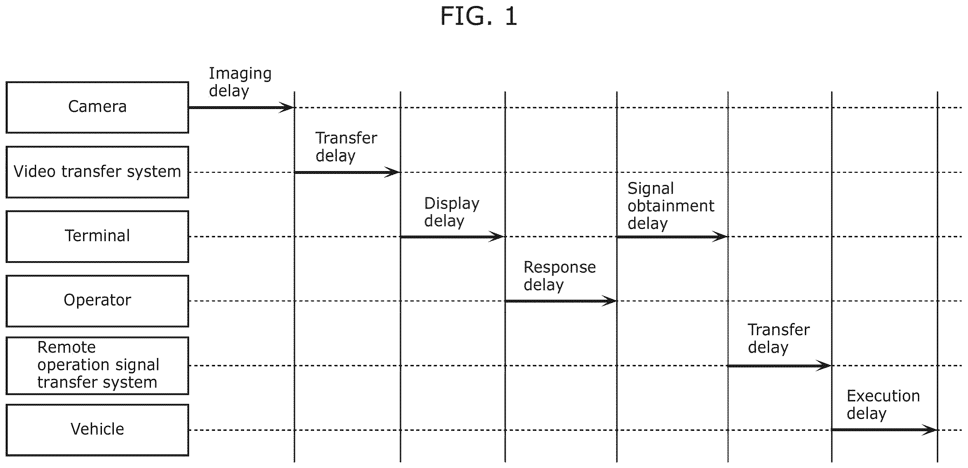

   FIG. 1 is a diagram for describing delay types.
[FIG. 2]

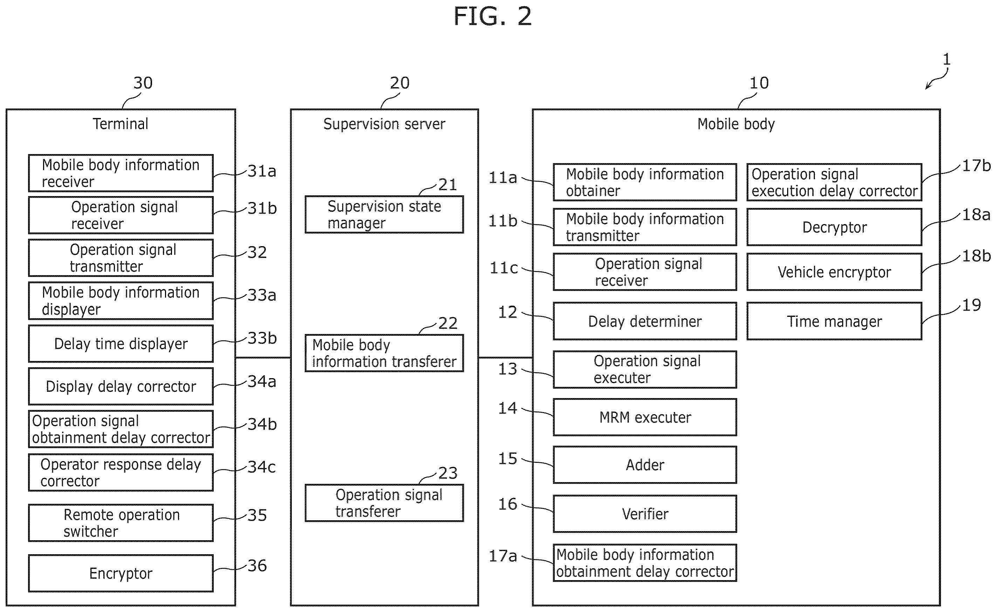

   FIG. 2 is a block diagram illustrating the functional configuration of a remote control system according to Embodiment 1.
[FIG. 3]

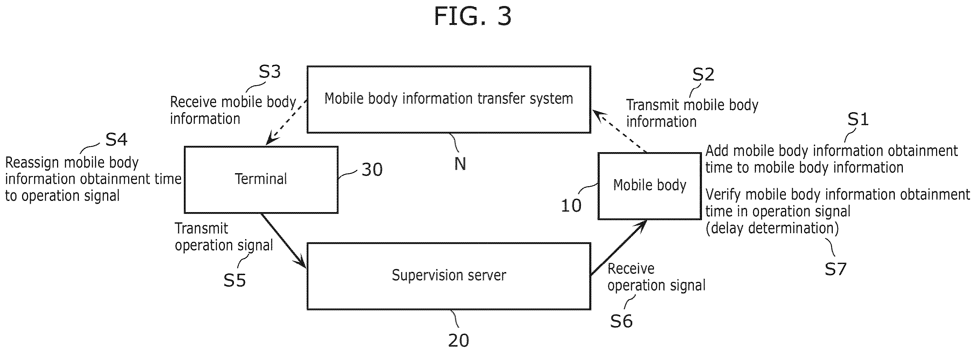

   FIG. 3 is a diagram for describing an overview of operations of the remote control system according to Embodiment 1.
[FIG. 4]

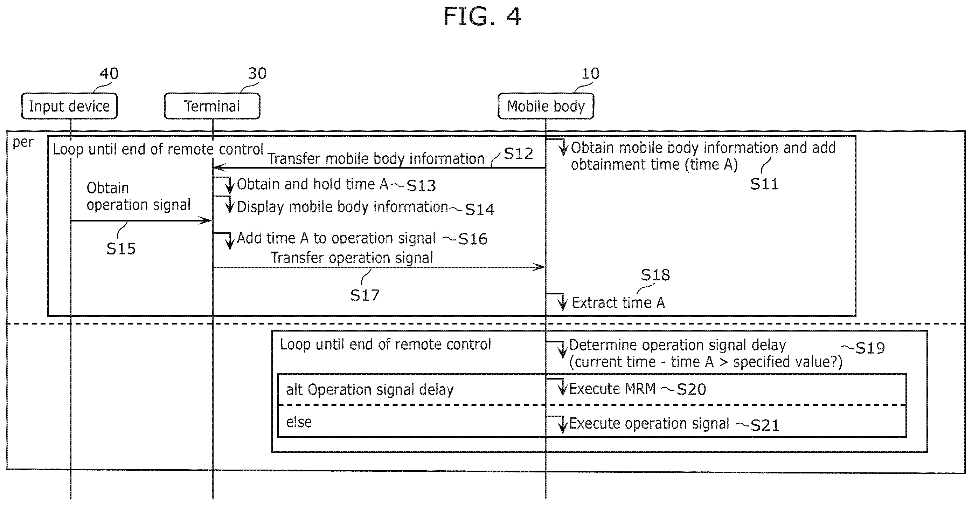

   FIG. 4 is a sequence diagram illustrating operations of the remote control system according to Embodiment 1.
[FIG. 5A]

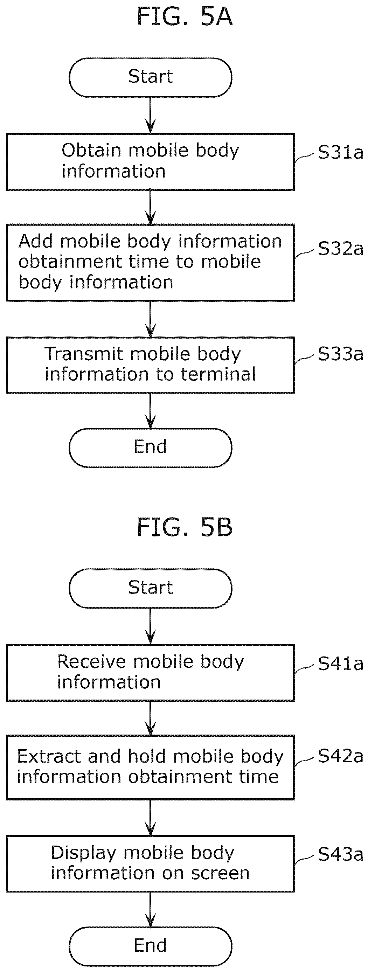

   FIG. 5A is a flowchart illustrating a first operation in a mobile body according to Embodiment 1.
[FIG. 5B]
   FIG. 5B is a flowchart illustrating a second operation in a terminal according to Embodiment 1.
[FIG. 5C]

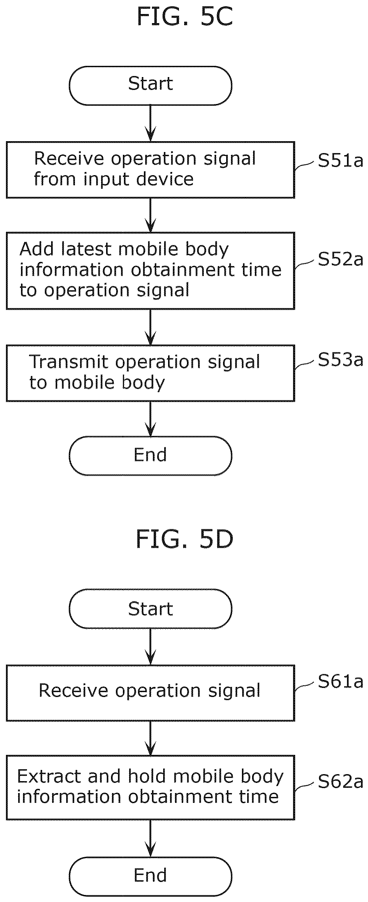

   FIG. 5C is a flowchart illustrating a third operation in the terminal according to Embodiment 1.
[FIG. 5D]
   FIG. 5D is a flowchart illustrating a fourth operation in the mobile body according to Embodiment 1.
[FIG. 5E]

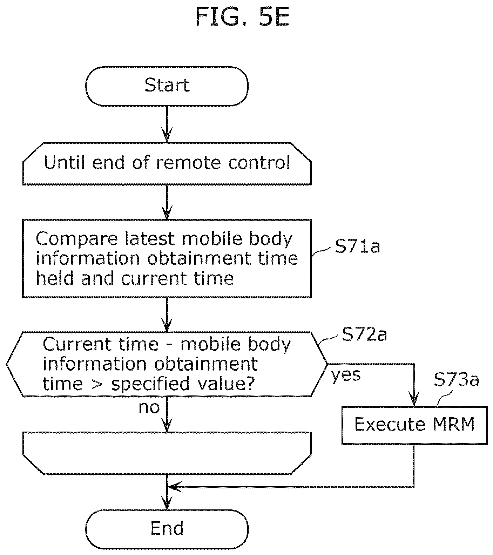

   FIG. 5E is a flowchart illustrating a fifth operation in the mobile body according to Embodiment 1.
[FIG. 6A]

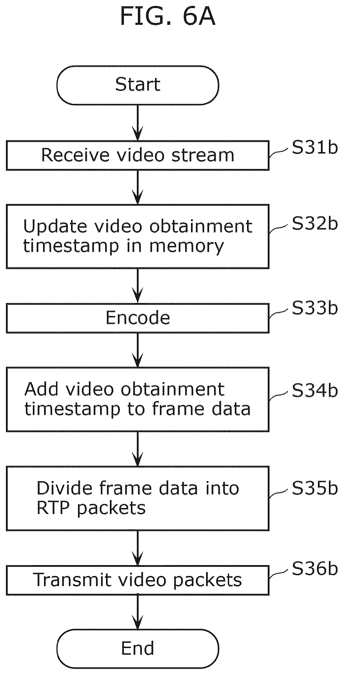

   FIG. 6A is a flowchart illustrating a specific example of the first operation in the mobile body according to Embodiment 1.
[FIG. 6B]

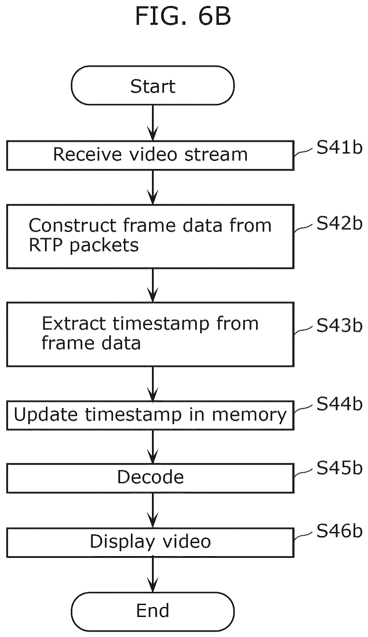

   FIG. 6B is a flowchart illustrating a specific example of the second operation in the terminal according to Embodiment 1.
[FIG. 6C]

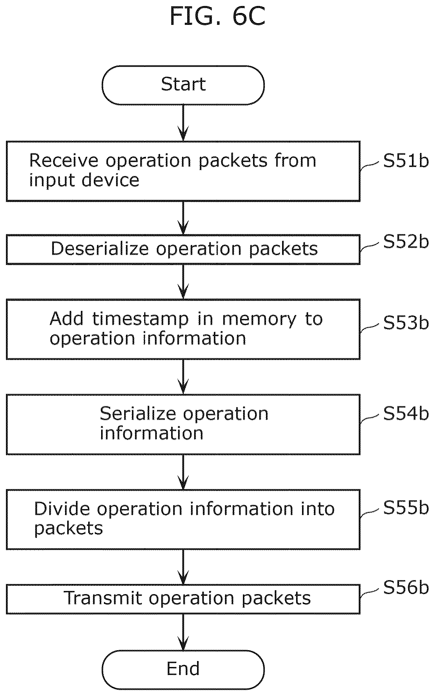

   FIG. 6C is a flowchart illustrating a specific example of the third operation in the terminal according to Embodiment 1.
[FIG. 6D]

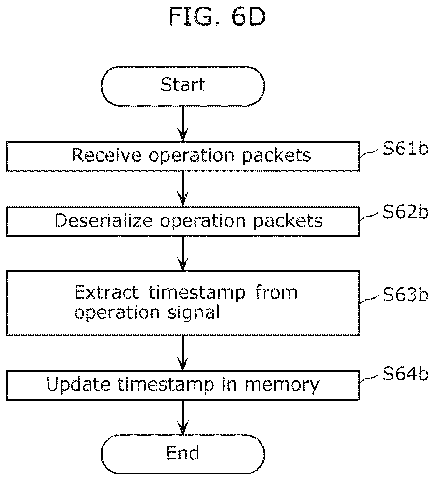

   FIG. 6D is a flowchart illustrating a specific example of the fourth operation in the mobile body according to Embodiment 1.
[FIG. 6E]

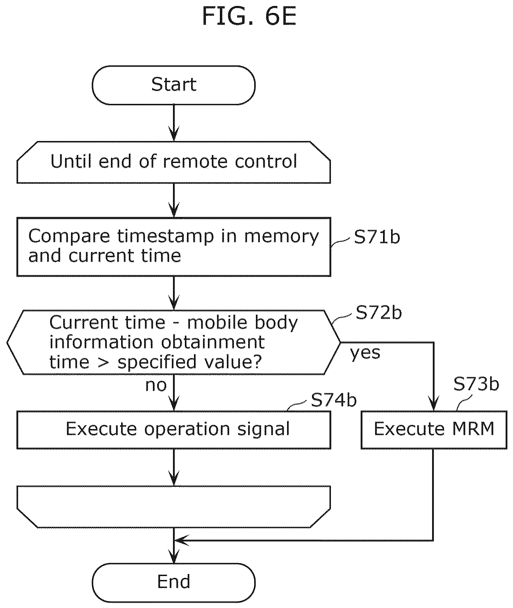

   FIG. 6E is a flowchart illustrating a specific example of the fifth operation in the mobile body according to Embodiment 1.
[FIG. 7]

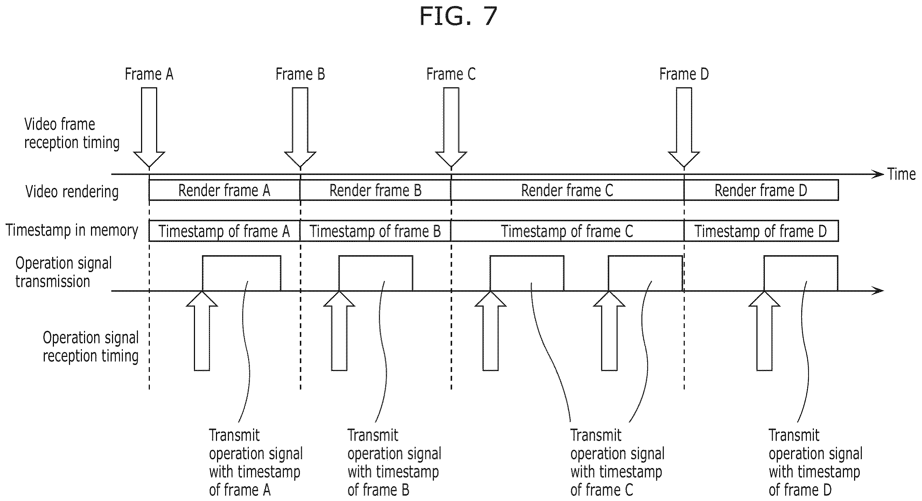

   FIG. 7 is a diagram for describing the details of operations of the remote control system according to Embodiment 1.
[FIG. 8]

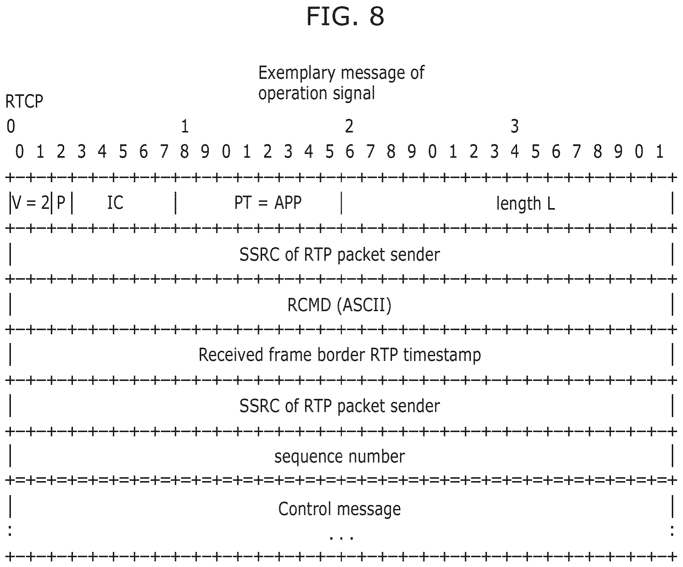

   FIG. 8 is a diagram illustrating an exemplary message of an operation signal according to Embodiment 1.
[FIG. 9]

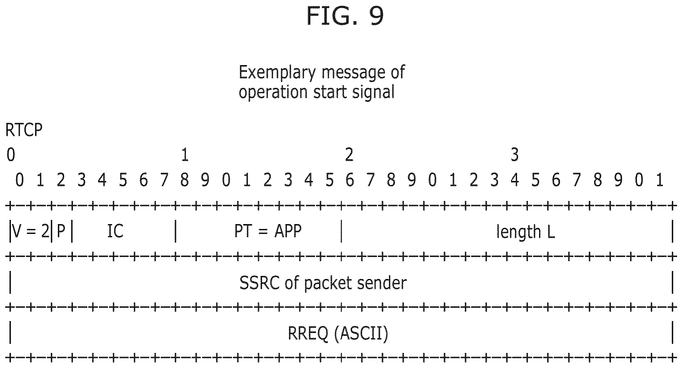

   FIG. 9 is a diagram illustrating an exemplary message of an operation start signal according to Embodiment 1.
[FIG. 10]

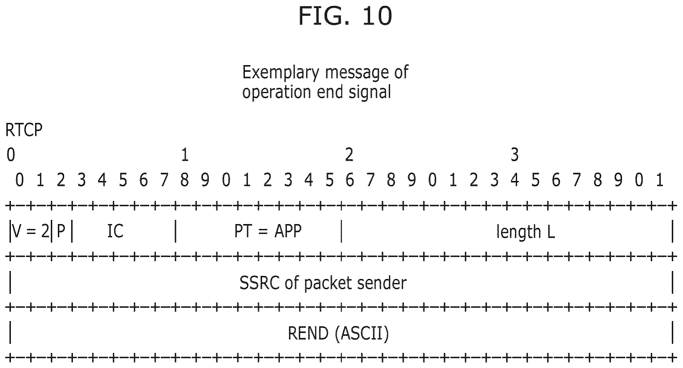

   FIG. 10 is a diagram illustrating an exemplary message of an operation end signal according to Embodiment 1.
[FIG. 11]

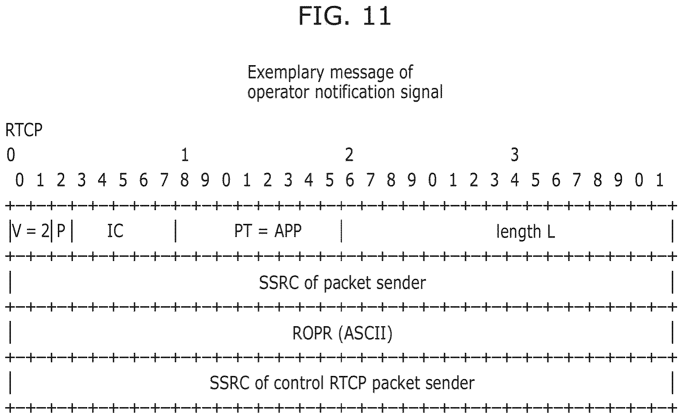

   FIG. 11 is a diagram illustrating an exemplary message of an operator notification signal according to Embodiment 1.
[FIG. 12]

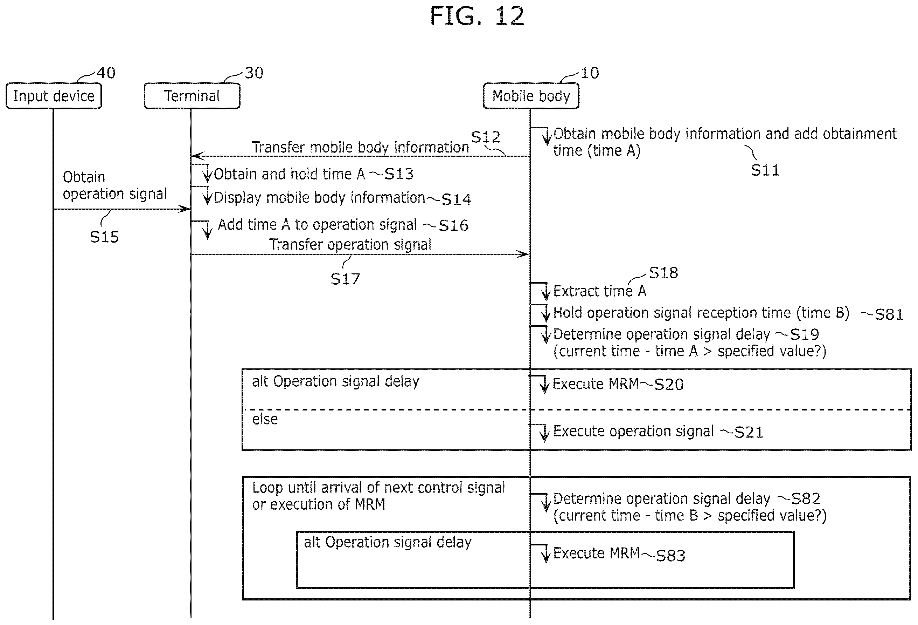

   FIG. 12 is a sequence diagram illustrating operations of the remote control system according to Embodiment 2.
[FIG. 13]

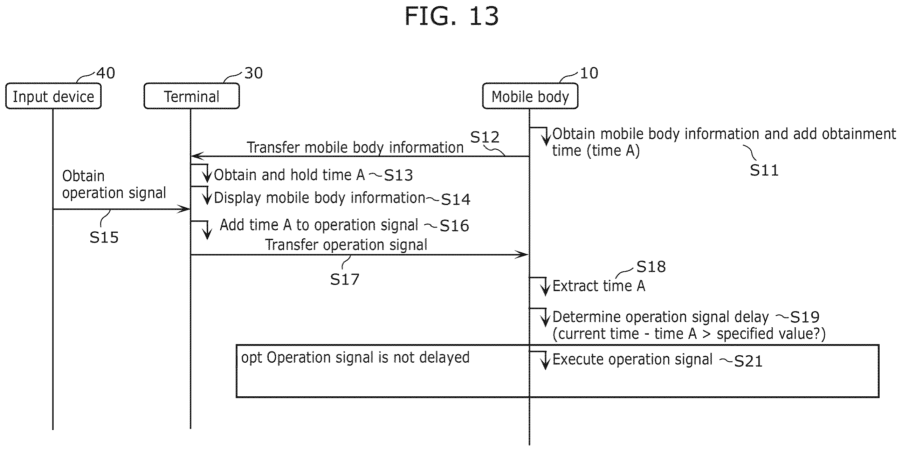

   FIG. 13 is a sequence diagram illustrating operations of the remote control system according to Embodiment 3.
[FIG. 14]

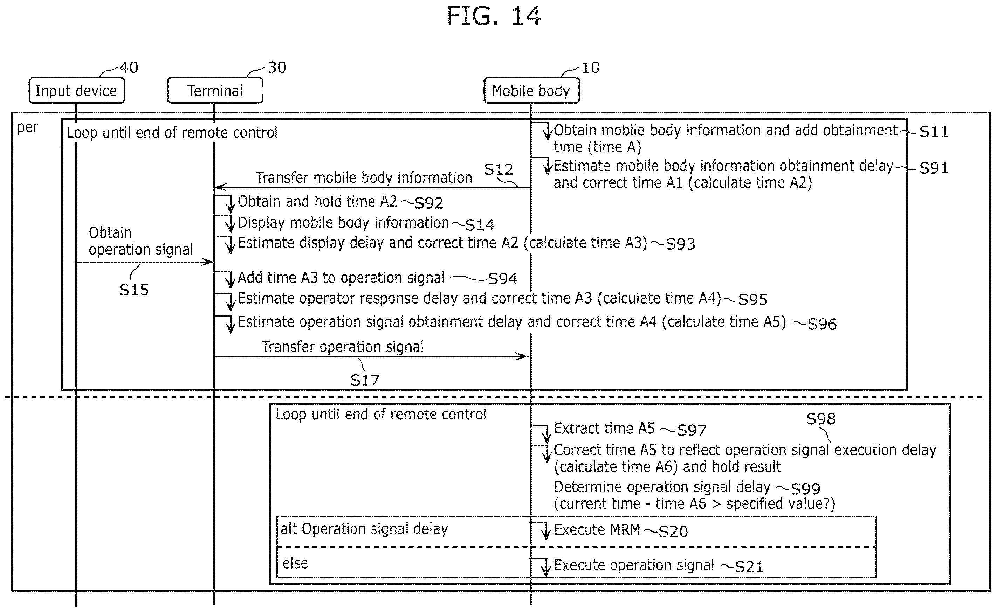

   FIG. 14 is a sequence diagram illustrating operations of the remote control system according to Embodiment 4.
[FIG. 15A]

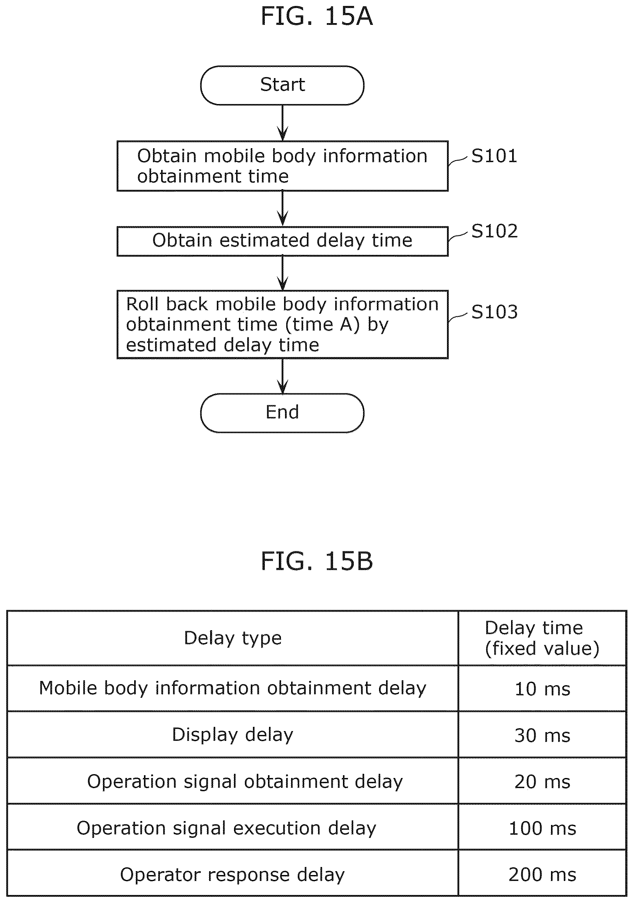

   FIG. 15A is a flowchart illustrating an example of operations of the remote the control system according to Embodiment 4.
[FIG. 15B]
   FIG. 15B is a diagram illustrating estimated delay times for different types of delays according to Embodiment 4.
[FIG. 16]

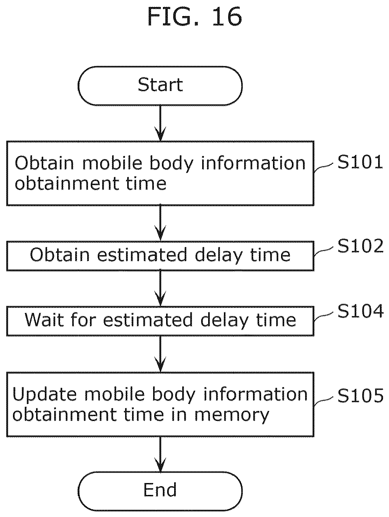

   FIG. 16 is a flowchart illustrating another example of operations of the remote control system according to Embodiment 4.
[FIG. 17]

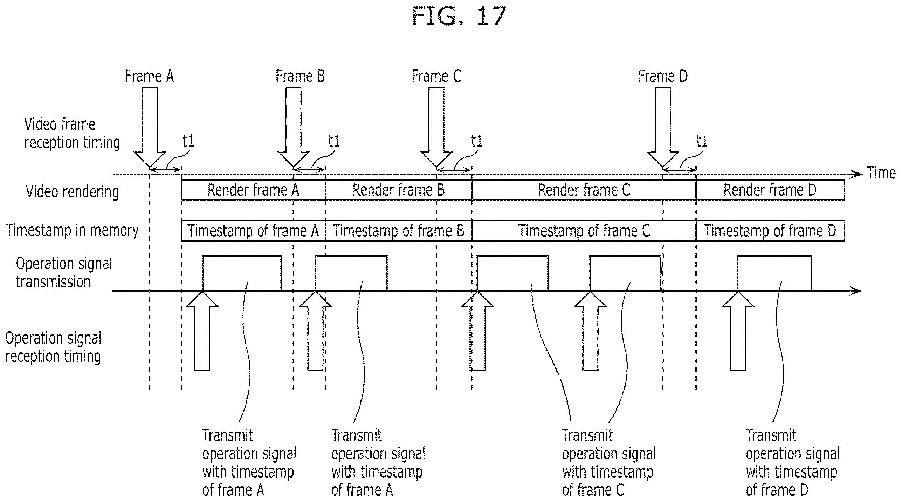

   FIG. 17 is a diagram for describing the details of another example of operations of the remote control system according to Embodiment 4.
[FIG. 18]

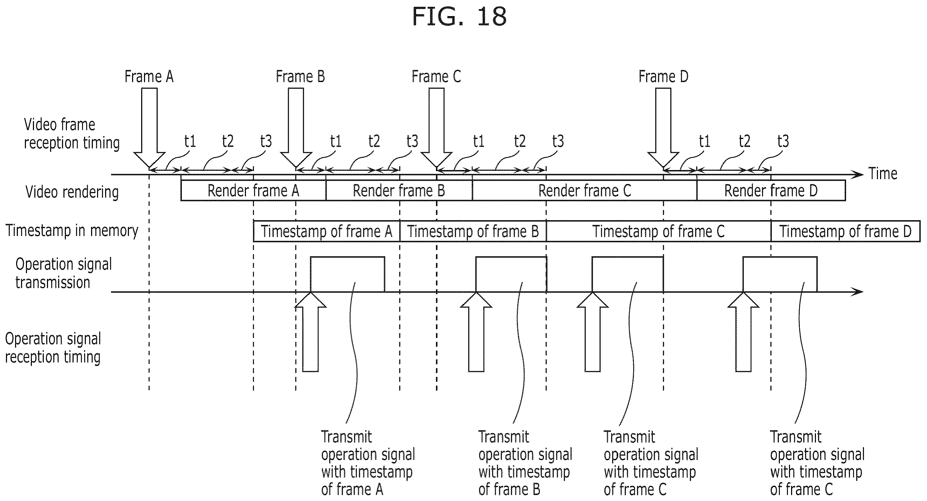

   FIG. 18 is a diagram for describing the details of still another example of operations of the remote control system according to Embodiment 4.
[FIG. 19A]

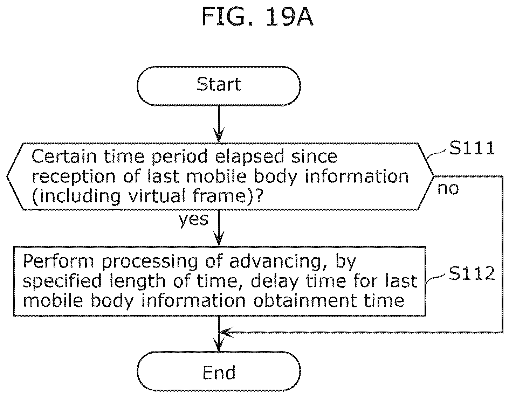

   FIG. 19A is a flowchart illustrating an example of operations of the remote control system according to Variation 1 of Embodiment 4.
[FIG. 19B]

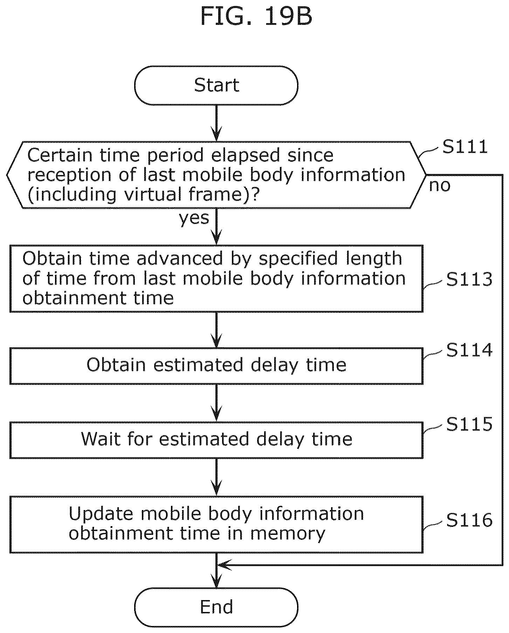

   FIG. 19B is a flowchart illustrating another example of operations of the remote control system according to Variation 1 of Embodiment 4.
[FIG. 20]

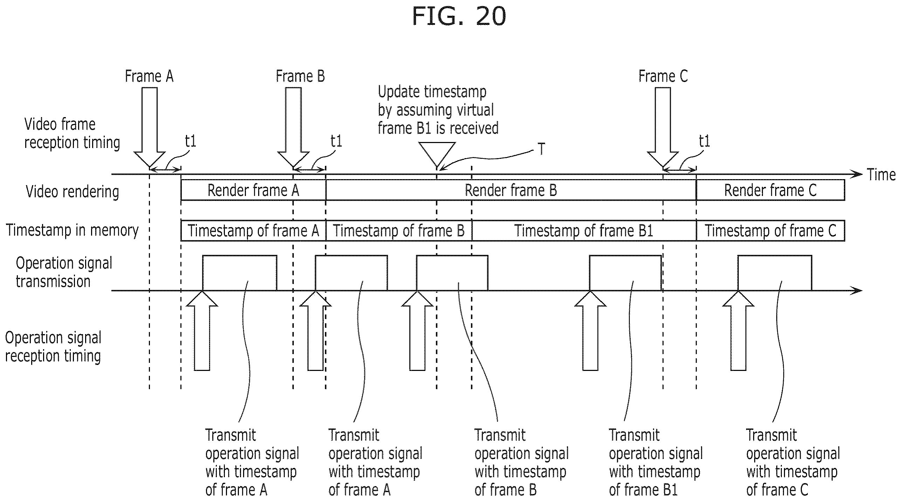

   FIG. 20 is a diagram for describing the details of another example of operations of the remote control system according to Variation 1 of Embodiment 4.
[FIG. 21A]

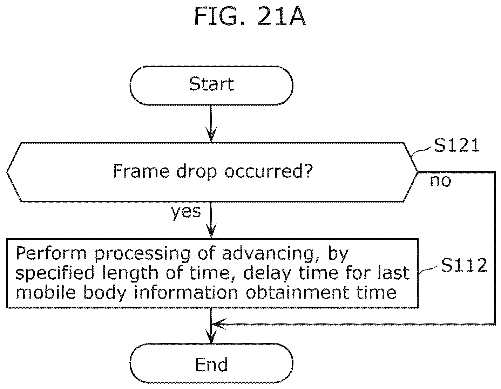

   FIG. 21A is a flowchart illustrating an example of operations of the remote control system according to Variation 2 of Embodiment 4.
[FIG. 21B]

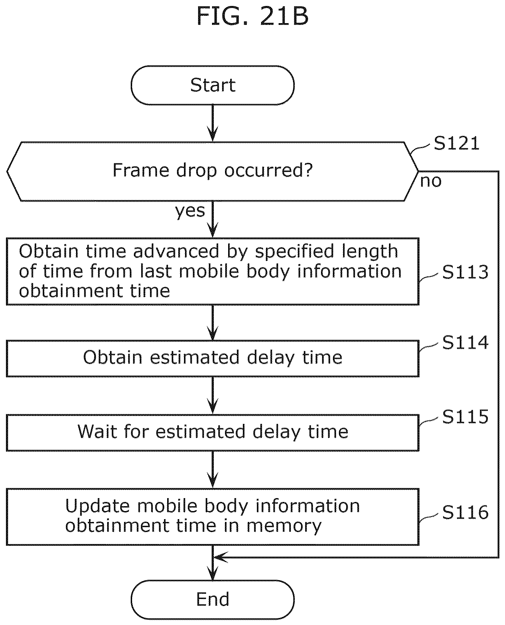

   FIG. 21B is a flowchart illustrating another example of operations of the remote control system according to Variation 2 of Embodiment 4.
[FIG. 22]

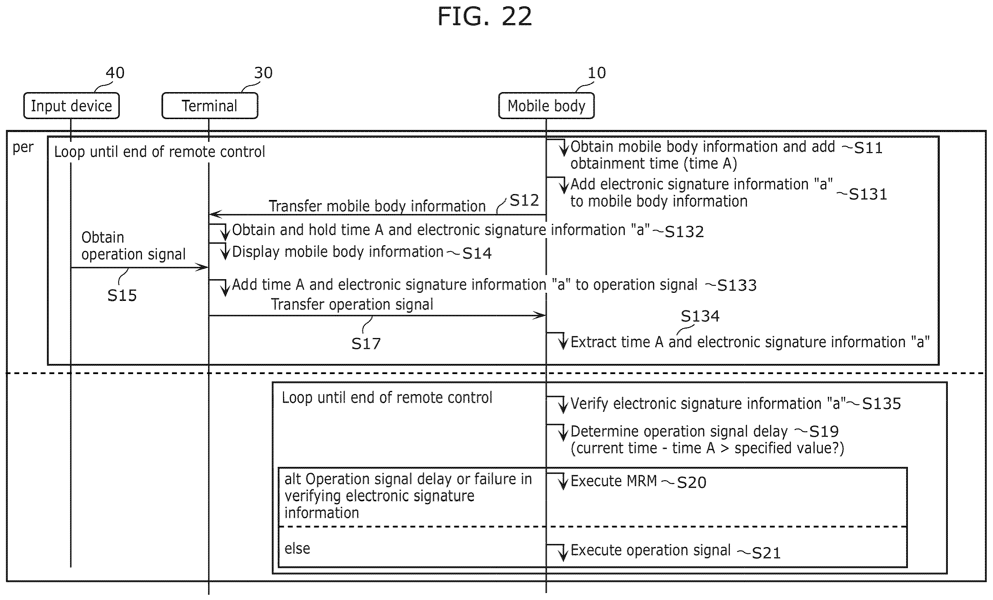

   FIG. 22 is a sequence diagram illustrating operations of the remote control system according to Embodiment 5.
[FIG. 23]

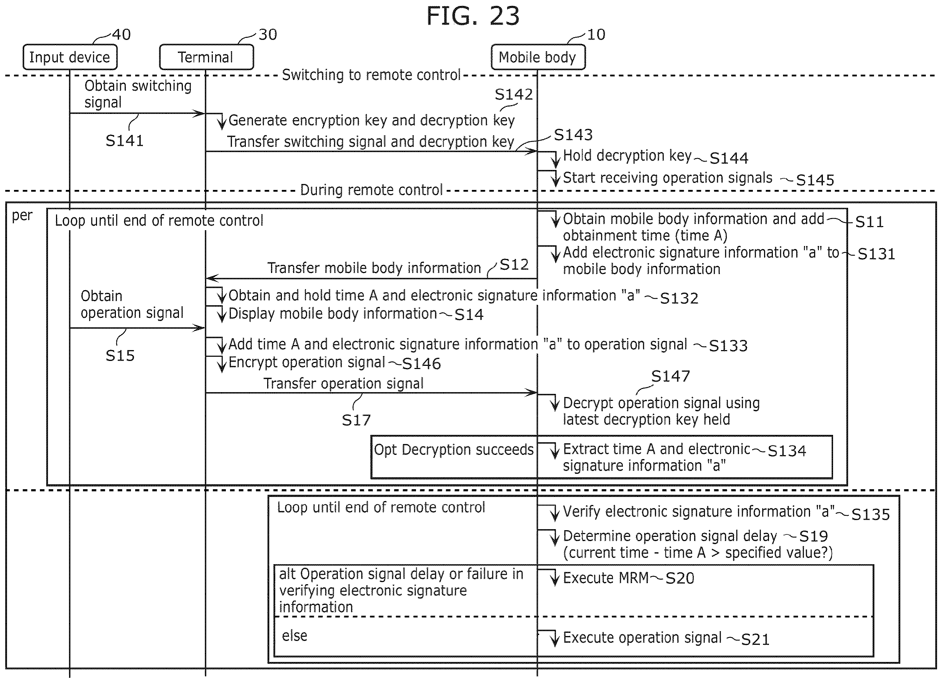

   FIG. 23 is a sequence diagram illustrating operations of the remote control system according to Variation 1 of Embodiment 5.
[FIG. 24]

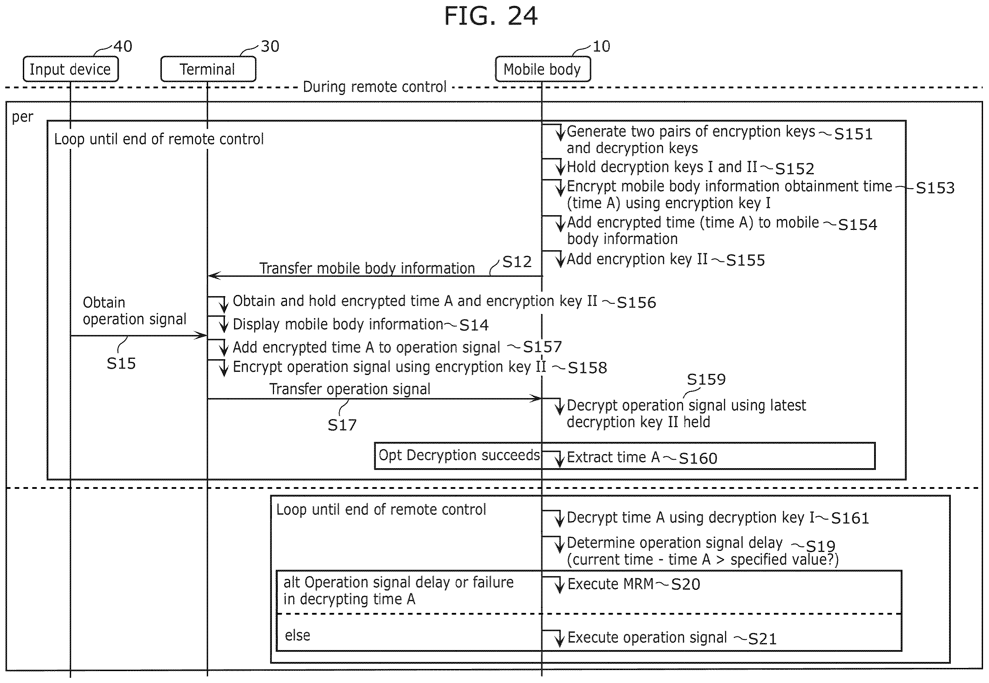

   FIG. 24 is a sequence diagram illustrating operations of the remote control system according to Variation 2 of Embodiment 5.
[FIG. 25]

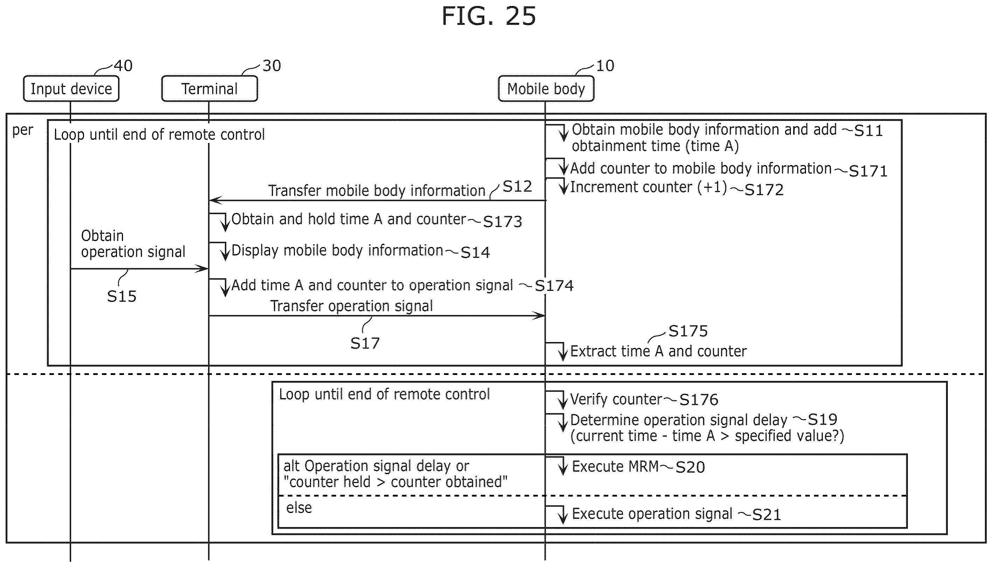

   FIG. 25 is a sequence diagram illustrating operations of the remote control system according to Embodiment 6.
[FIG. 26]

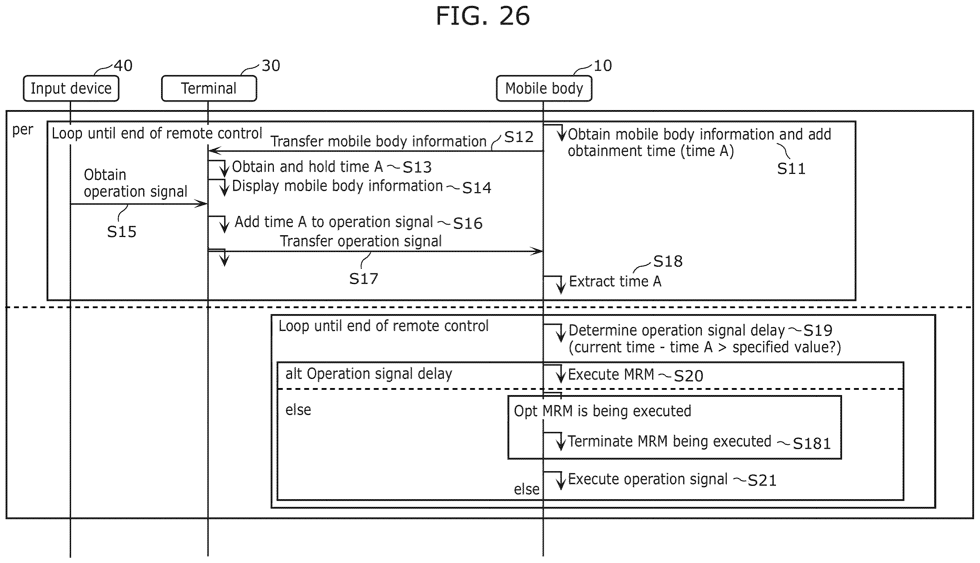

   FIG. 26 is a sequence diagram illustrating operations of the remote control system according to Embodiment 7.
[FIG. 27]

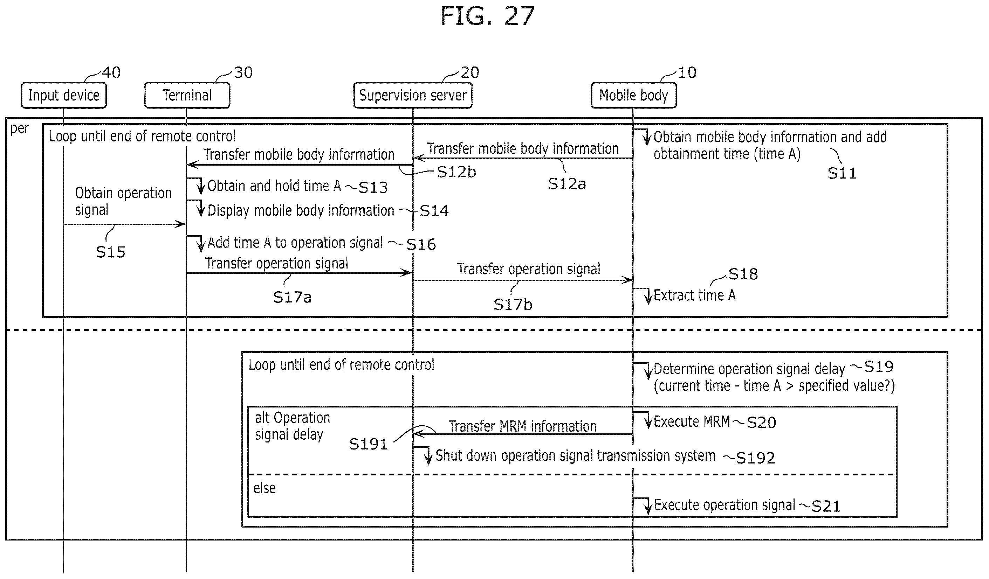

   FIG. 27 is a sequence diagram illustrating operations of the remote control system according to Embodiment 8.
[FIG. 28]

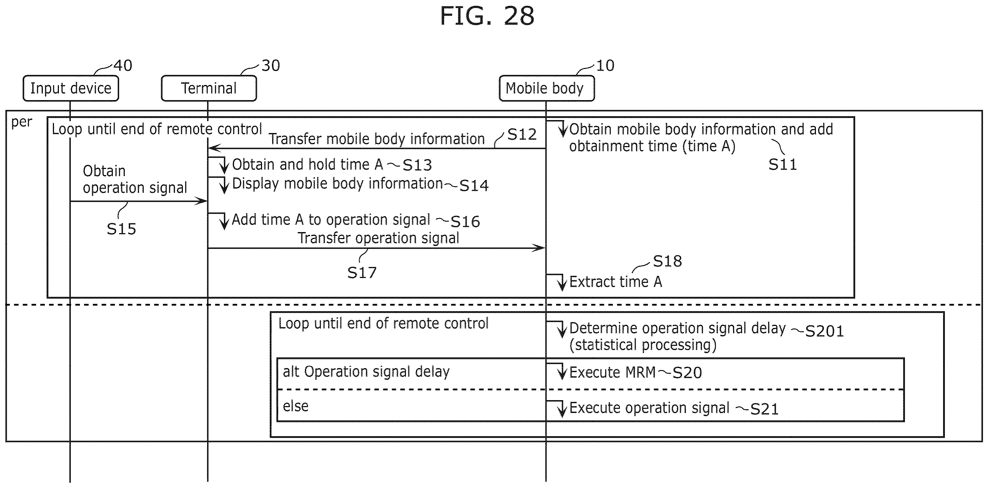

   FIG. 28 is a sequence diagram illustrating operations of the remote control system according to Embodiment 9.
[FIG. 29A]

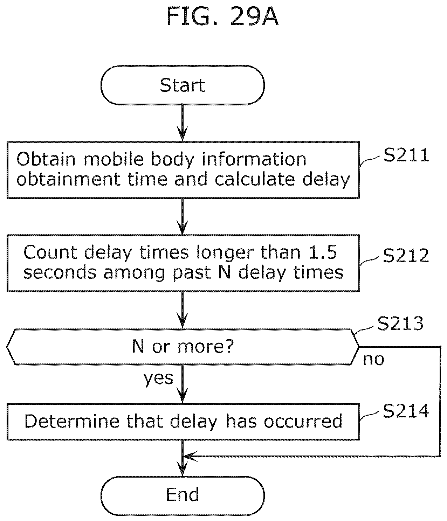

   FIG. 29A is a flowchart illustrating an example of operations of the remote control system according to Embodiment 9.
[FIG. 29B]

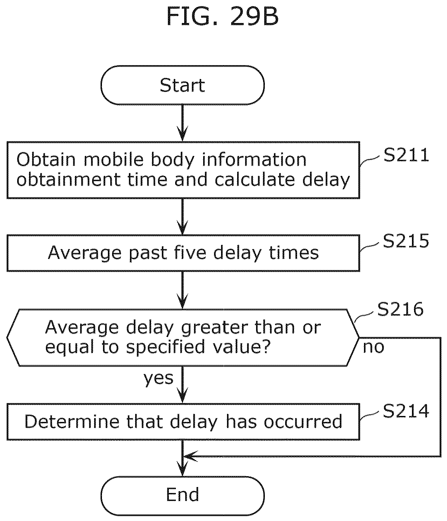

   FIG. 29B is a flowchart illustrating another example of operations of the remote control system according to Embodiment 9.
[FIG. 30]

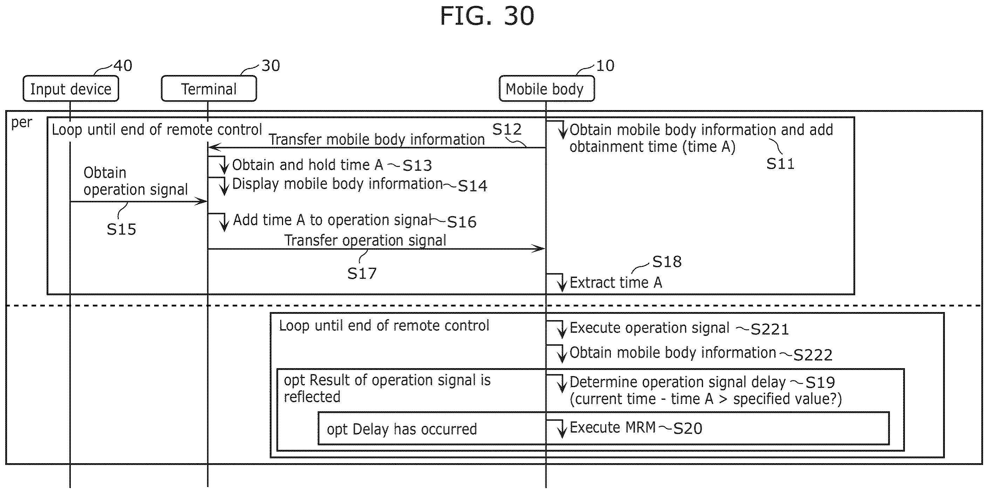

   FIG. 30 is a sequence diagram illustrating operations of the remote control system according to Embodiment 10.
[FIG. 31]

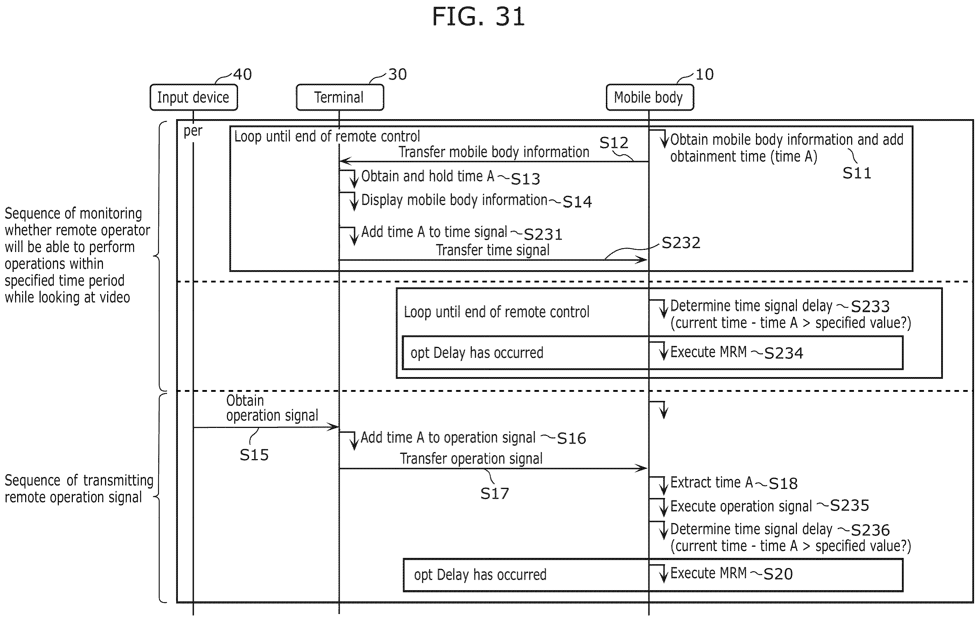

   FIG. 31 is a sequence diagram illustrating operations of the remote control system according to Embodiment 11.
[FIG. 32]

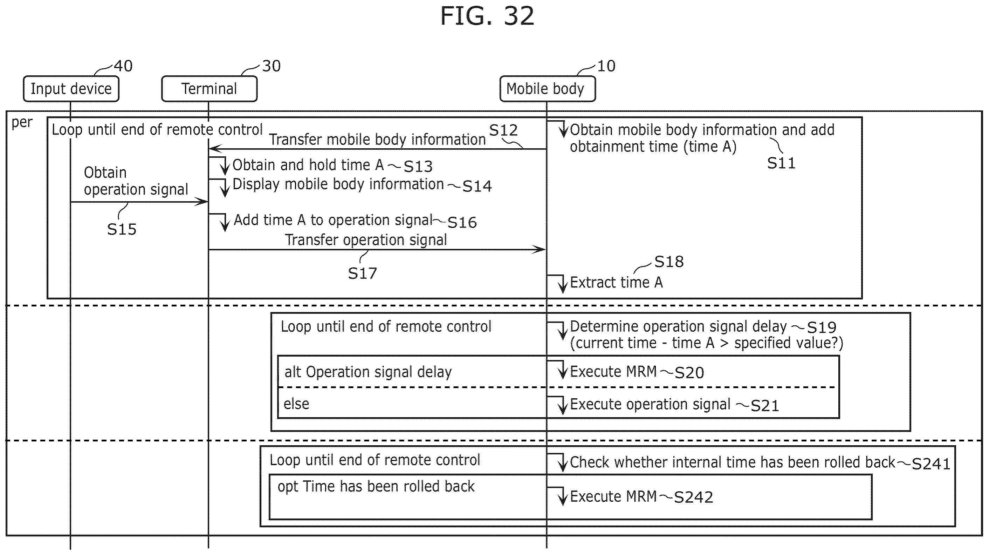

   FIG. 32 is a sequence diagram illustrating operations of the remote control system according to Embodiment 12.
[FIG. 33]

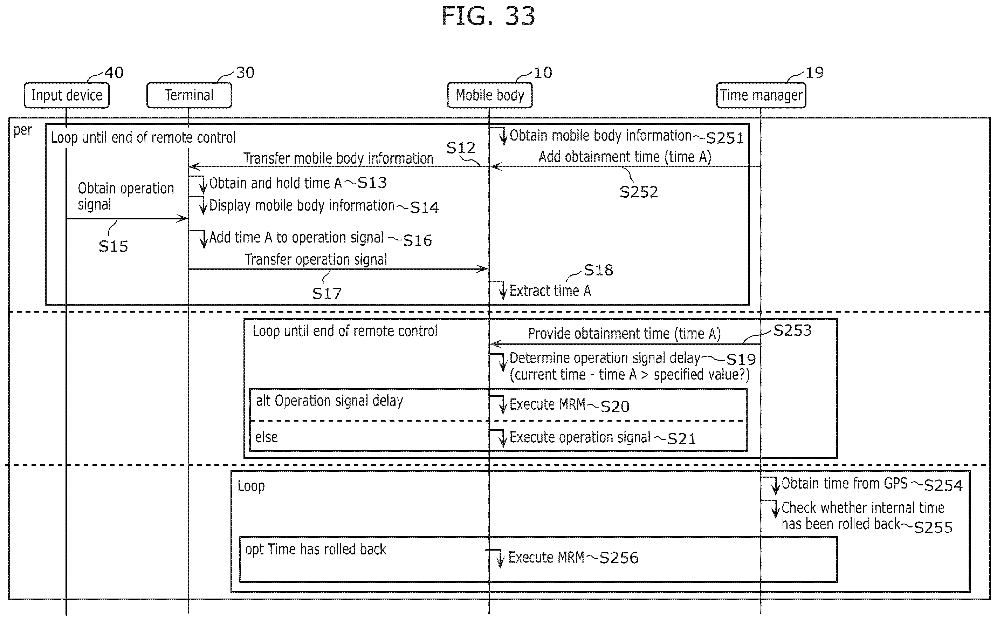

   FIG. 33 is a sequence diagram illustrating operations of the remote control system according to a variation of Embodiment 12.

### [Description of Embodiments]

### (Circumstances Leading to the Present Disclosure)

Ahead of the description of the embodiments, and so on, of the present disclosure, the circumstances leading to the present disclosure will be described with reference to FIG. 1.

As described in the Background Art, allowing a self-driving vehicle to be remotely controlled by a control operator (an operator) as necessary is under consideration. When remotely controlling a self-driving vehicle, the operator needs to recognize the situation around the vehicle in real time such that the operator's operations based on the recognition results are reflected in the behaviors of the mobile body with sufficiently short delays.

To this end, it may be desirable to monitor a transfer delay in the system as a whole, including not only the transfer delay of an operation signal (a control signal) for remote control, but also the transfer delay of vehicle information, such as a video, necessary for determining an operation.

It is to be noted that remote control includes remote operation and remote monitoring. Remote operation refers to performing operations on movements of a mobile body using input devices such as a handle. Further, remote assistance may refer to allowing movements of a mobile body without using input devices such as a handle. In remote assistance, a mobile body drives automonously. An example of remote assistance is issuing a driving start instruction to cause a stopped mobile body to start driving.

Here, with reference to FIG. 1, delays in a system that includes a mobile body and an operator's terminal will be described. FIG. 1 is a diagram for describing delay types.

As illustrated in FIG. 1, exemplary delay types include imaging delay, transfer delay in a video transfer system, display delay, response delay, signal obtainment delay, transfer delay in a remote operation signal transfer system, and execution delay.

An imaging delay is a delay involved in imaging by an imaging device, such as a camera, provided in the mobile body. For example, an imaging delay is the time period from when the imaging device starts imaging to when the mobile body obtains a video (an example of mobile body information) generated by imaging.

A transfer delay in a video transfer system is a communication delay in transferring the mobile body information, including the video, from the mobile body such as a vehicle to the operator's terminal. For example, a transfer delay in a video transfer system is the time period from when the mobile body transmits the mobile body information to when the terminal receives the mobile body information.

A display delay is a processing delay involved in displaying, on a display, the video in the mobile body information received by the terminal. For example, a display delay is the time period from when the terminal receives the mobile body information to when the mobile body information is displayed on the display.

A response delay is a delay involved in the operator performing an operation for remote control while checking the mobile body information displayed on the display. For example, a response delay is the time period from when the mobile body information is displayed on the display to when the operator performs an operation on an input device.

A signal obtainment delay is a delay involved in the terminal obtaining an operation signal corresponding to the operation inputted by the operator. For example, a signal obtainment delay is the time period from when the operator inputs the operation to the input device to when the terminal receives the operation signal.

It is to be noted that an operation signal is a signal based on an operation for the mobile body performed by the operator to remotely control the mobile body through the terminal. The operation signal includes the details of the remote control (e.g., a control command) performed by the operator on an input device. For example, an operation signal may include a control value for the rotation rate of the motor, the speed (the accelerator speed or the brake speed), or the steering angle.

A transfer delay in a remote operation signal transfer system is a communication delay in transferring the operation signal from the terminal to the mobile body. For example, a transfer delay in a remote operation signal transfer system is the time period from when the terminal transmits the operation signal to when the mobile body receives the operation signal.

An execution delay is a delay involved in the mobile body actually completing control according to the details of the operation signal received by the mobile body. An execution delay is the time period from when the mobile body receives the operation signal to when the control according to the operation signal is completed (e.g., the rotation rate of the motor of the mobile body reaches a rotation rate indicated in the operation signal).

Thus, various delays may occur in the system. Patent Literature 1 mainly addresses the transfer delay in a remote operation signal transfer system, but not other delays.

In addition, measuring delays using a different mechanism such as ping/pong arouses concerns that it may impede the detection of video delays and operation delays in an event such as a sudden delay.

In view of the above, the inventors earnestly studied delay detection methods, and so on, capable of more accurately monitoring delays in a system as a whole, and provide a delay detection method, and so on, described below.

A delay detection method according to a first aspect of the present disclosure is a delay detection method to be executed by a mobile body that is remotely controllable by an operator. The delay detection method includes: adding first time information to mobile body information indicating a state of the mobile body, and transmitting, to a terminal of the operator, the mobile body information to which the first time information has been attached; receiving an operation signal that is based on an operation performed by the operator on the mobile body in response to the mobile body information, the operation signal including second time information that is based on the first time information included in the mobile body information; and detecting a delay in a remote control system including the mobile body and the terminal, based on the second time information and a predetermined time.

Accordingly, the mobile body can detect a delay that includes at least a round-trip transfer delay in the remote control system. Thus, the delay detection method enables more accurate monitoring of a delay in the remote control system as a whole than methods based only on a transfer delay in one of the outward and return trips. The ability of the mobile body to detect delays enables safety measures suitable for the delays to be taken on the mobile-body side.

Furthermore, for example, a delay detection method according to a second aspect is the delay detection method according to the first aspect, in which, the predetermined time may be a current time, and, in the detecting of the delay, a difference between the second time information and the current time may be calculated, and the delay may be detected based on the difference calculated.

Accordingly, the delay can be detected without having to perform complex calculation, just by calculating the difference between the second time information and the current time.

Furthermore, for example, a delay detection method according to a third aspect is the delay detection method according to the first aspect or the second aspect, in which, in the detecting of the delay, the difference between the second time information included in the operation signal received most recently and the current time may be calculated regularly.

Accordingly, since the detection of delay is performed regularly, delay can be monitored more accurately even when delay varies over time, and so on.

Furthermore, for example, a delay detection method according to a fourth aspect is the delay detection method according to any one of the first to third aspects, that may include: causing the mobile body to execute a predetermined operation, when the delay is detected.

Accordingly, since a predetermined operation is to be executed, a safety measure that is in accordance with the delay can be performed on the mobile body-side, for example.

Furthermore, for example, a delay detection method according to a fifth aspect is the delay detection method according to any one of the first to third aspects, that may include: causing the mobile body to execute a predetermined operation, when an internal time of the mobile body is rolled back a predetermined length of time or more.

Accordingly, when the internal time of the mobile body is rolled back by a predetermined length of time or more, that is, when delay cannot be detected accurately, it is possible to cause the mobile body to execute a predetermined operation. For example, when the internal time of the mobile body is rolled back by a predetermined length of time or more, the mobile body can be placed in a safe state.

Furthermore, for example, a delay detection method according to a sixth aspect is the delay detection method according to the fourth aspect or the fifth aspect, in which, the causing the mobile body to execute the predetermined operation may include causing the mobile body to execute a minimal risk maneuver (MRM).

Accordingly, in a case where a delay is detected, and the like, safety of the mobile body can be ensured.

Furthermore, for example, a delay detection method according to a seventh aspect is the delay detection method according to the fourth aspect or the fifth aspect, in which, the operation signal may include a control command that is based on the operation by the operator, and the predetermined operation may include ignoring the control command included in the operation signal received.

Accordingly, when a delay is detected, the mobile body can be prevented from being controlled by an operation signal considered inappropriate for the state of the mobile body at the time of detection of the delay. This leads to ensuring the safety of the mobile body.

Furthermore, for example, a delay detection method according to a eighth aspect is the delay detection method according to any one of the first to seventh aspects, in which, the first time information may include a time obtained by correcting a time at which predetermined information included in the mobile body information is obtained, the correcting being based on a time period up to when the predetermined information is obtained.

This enables delay determination that reflects the time period required to obtain the predetermined information (e.g., an imaging delay). The inclusion of this time period enables calculation of a more accurate delay, thus leading to more accurate monitoring of a delay in the remote control system as a whole.

Furthermore, for example, a delay detection method according to a ninth aspect is the delay detection method according to any one of the first to eighth aspects, in which, the second time may include a time obtained by correcting the first time information, based on a time period from when the mobile body information is received by the terminal to when the mobile body information is displayed by the terminal.

This enables delay determination that reflects the time period between the reception of the mobile body information and the display of the mobile body information (e.g., a display delay). The inclusion of this time period enables calculation of a more accurate delay, thus leading to more accurate monitoring of a delay in the remote control system as a whole.

Furthermore, for example, a delay detection method according to a tenth aspect is the delay detection method according to any one of the first to ninth aspects, in which, the second time information may be corrected based on a time period from when the operation signal is received by the mobile body to when control according to the operation signal is completed by the mobile body, and the delay in the remote control system may be detected based on the second time information corrected and the predetermined time.

Accordingly, delay determination can be performed with consideration being given to a time period up to when the control according to the operation signal is completed (for example, execution delay). Since the above-described time is included, more accurate delay can be calculated, and thus delay in the remote control system as a whole can be monitored more accurately.

Furthermore, for example, a delay detection method according to an eleventh aspect is the delay detection method according to any one of the first to tenth aspects, in which, first signature information may be further added to the mobile body information, and the mobile body information to which the first signature information has been added may be transmitted to the terminal of the operator, the operation signal further including second signature information may be received, and the delay detection method may further include: performing verification of the second signature information, based on the first signature information.

Accordingly, the operator can confirm that remote control is being performed, by using the electronic signatures, after confirming the mobile body information transmitted by the operator's device.

Furthermore, for example, a delay detection method according to a twelfth aspect is the delay detection method according to the eleventh aspect, in which, the second signature information may be information that is transmitted from the terminal at a start of remote control.

Accordingly, at the start of the remote operation, the operator can confirm that an operation signal is being transmitted, after confirming the mobile body information transmitted by the operator's device.

Furthermore, for example, a delay detection method according to a thirteenth aspect is the delay detection method according to any one of the first to twelfth aspects, in which, first counter information may be further added to the mobile body information, and the mobile body information to which the first counter information has been added may be transmitted to the terminal of the operator, the operation signal further including second counter information may be received, and the delay detection method may further include: performing verification of the second counter information.

Accordingly, it is possible to confirm that the mobile body information and the operation signal are being transmitted in order, by using a counter.

Furthermore, for example, a delay detection method according to a fourteenth aspect is the delay detection method according to the sixth aspect, that may further include: terminating execution of the MRM, when the delay is resolved during the execution of the MRM.

Accordingly, when the delay is resolved, the mobile body can automatically return from the MRM.

Furthermore, for example, a delay detection method according to a fifteenth aspect is the delay detection method according to any one of the first to fourteenth aspects, that may further include: receiving a time signal including the second time information, from the terminal, when the operator does not perform remote control on the mobile body.

Accordingly, delay can be detected even in a state in which the operator is performing remote assistance, and the like.

Furthermore, for example, a delay detection method according to a sixteenth aspect is the delay detection method according to any one of the first to fifteenth aspects, in which, the first time information may be encrypted using a first encryption key, the first time information encrypted may be added to the mobile body information, and the mobile body information to which the first time information encrypted has been added may be transmitted to the terminal, and the delay detection method may further include: decrypting the second time information included in the operation signal, using a first decryption key corresponding to the first encryption key.

Accordingly, the operator can confirm that the remote control is being performed, by using encryption technology, after confirming the mobile body information transmitted by the operator's device.

Furthermore, for example, a delay detection method according to a seventeenth aspect is the delay detection method according to any one of the first to sixteenth aspects, in which, a second encryption key may be added to the mobile body information, and the mobile body information to which the second encryption key has been added may be transmitted to the terminal, the operation signal that has been encrypted using the second encryption key may be received, and the delay detection method may further include: decrypting the operation signal received, using a second decryption key corresponding to the second encryption key.

Accordingly, it is possible to confirm the operation signal has not been tampered with. It is possible to prevent the mobile body from being controlled by an unauthorized operation signal.

Furthermore, for example, a delay detection method according to an eighteenth aspect is the delay detection method according to any one of the first to seventeenth aspects, in which, a time indicated by the first time information and a time indicated by the second time information may be a same time.

Accordingly, a delay that includes a round-trip transfer delay in the remote control system can be detected. Furthermore, since correction of the first time information does not have to be performed by the terminal, the processing amount of the terminal can be reduced.

Furthermore, for example, a delay detection device according to a nineteenth aspect is a delay detection device included in a mobile body that is remotely controllable by an operator. The delay detection device includes: a transmitter that adds first time information to mobile body information indicating a state of the mobile body, and transmits, to a terminal of the operator, the mobile body information to which the first time information has been attached; a receiver that receives an operation signal that is based on an operation performed by the operator on the mobile body in response to the mobile body information, the operation signal including second time information that is based on the first time information included in the mobile body information; and a determiner that detects a delay in a remote control system including the mobile body and the terminal, based on the second time information and a predetermined time. Furthermore, for example, a program according to a twentieth aspect is a program for causing a computer to execute the delay detection method according to any one of the first to eighteenth aspects.

Accordingly, the same advantageous effect as that of the delay detection method is produced.

It is to be noted that these general or specific aspects may be implemented as a system, a method, an integrated circuit, a computer program, or a non-transitory computer-readable recording medium such as a CD-ROM, or may be implemented as any combination of a system, a method, an integrated circuit, a computer program, and a recording medium. The program may be stored in advance in the recording medium or may be supplied to the recording medium via a wide area communication network such as the Internet.

Hereinafter, embodiments, and so on, will be described in detail with reference to the Drawings.

It is to be noted that each of the following embodiments, and so on, indicate a specific example of the present disclosure. The numerical values, shapes, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

Furthermore, the respective figures are schematic diagrams and are not necessarily precise illustrations. Therefore, for example, the scaling, and so on, depicted in the drawings is not necessarily uniform. Furthermore, in the figures, elements which are substantially the same are given the same reference signs, and overlapping description is omitted or simplified.

Additionally, in the present Description, terms indicating relations between elements, such as "matching" and so on; numerical values; and numerical ranges are not strictly defined and include a substantially same range which includes, for example, a margin of error of a few percent (or approximately 10%).

Furthermore, in the present Description, unless otherwise stated, ordinal numbers such as "first", "second", and so on, do not define the number or order of elements, and are used for the purpose of distinguishing between elements of the same type to avoid confusion.

### [Embodiment 1]

Hereinafter, a delay detection method, and so on, according to the present embodiment will be described with reference to FIG. 2 to FIG. 11.

### [1-1. Configuration of remote control system]

First, the configuration of a remote control system that performs a delay detection method will be described with reference to FIG. 2. FIG. 2 is a block diagram illustrating the functional configuration of remote control system 1 according to the present embodiment.

As illustrated in FIG. 2, remote control system 1 includes mobile body 10, supervision server 20, and terminal 30. Remote control system 1 is a system for remotely operating, as necessary, mobile body 10 capable of self-driving.

Mobile body 10 is a vehicle switchable between self-driving and remotely operated driving. For example, the vehicle may be an automobile, as well as a truck, a bus, or a train. Mobile body 10 may also be an aerial vehicle such as a drone, or a watercraft.

Mobile body 10 includes: functional components, implemented by a unit such as a central processing unit (CPU) or a micro processor unit (MPU), that perform processing; and memory units, such as read only memory (ROM) and random access memory (RAM), that store programs for causing the functional components to perform various sorts of processing. Further, mobile body 10 includes, as its functional components, mobile body information obtainer 11a, mobile body information transmitter 11b, operation signal receiver 11c, delay determiner 12, operation signal executer 13, minimal risk maneuver (MRM) executer 14, adder 15, verifier 16, mobile body information obtainment delay corrector 17a, operation signal execution delay corrector 17b, decryptor 18a, vehicle encryptor 18b, and time manager 19.

Mobile body information obtainer 11a obtains mobile body information from sources such as sensors provided in mobile body 10; the information may include a camera-captured video, sensor information such as radar information, or mobile body property information such as the vehicle speed. Further, mobile body information obtainer 11a obtains, as a mobile body information obtainment time, the time at which the mobile body information is obtained from sources such as sensors. It is to be noted that the mobile body information may include at least information indicating the result of detecting the surroundings of mobile body 10, or information indicating the driving state of mobile body 10. For example, the mobile body information may include at least one of the following information items: a camera-captured video, LiDAR information (the result of measurement by a LiDAR), radar information (the result of measurement by a radar), sonar information (the result of measurement by a sonar), the speed of the mobile body, and the angular velocity of the mobile body.

Mobile body information transmitter 11b adds the mobile body information obtainment time to the mobile body information and transmits the mobile body information to terminal 30. Mobile body information transmitter 11b is an example of a transmitter.

Operation signal receiver 11c receives an operation signal from terminal 30 and obtains the mobile body information obtainment time included in the operation signal. Operation signal receiver 11c is an example of a receiver.

Delay determiner 12 calculates a round-trip delay (a delay time) based on the mobile body information obtainment time and the current time. The round-trip delay includes at least a transfer delay in a video transfer system and a transfer delay in a remote operation signal transfer system, illustrated in FIG. 1. Further, delay determiner 12 determines whether the delay is not longer than a threshold. That is, delay determiner 12 determines whether a delay has occurred. It is to be noted that the occurrence of a delay means that the delay is greater than a specified value (a threshold). The current time is an example of a predetermined time, and delay determiner 12 is an example of a determiner.

Operation signal executer 13 causes, based on the operation signal, mobile body 10 to perform a specific operation according to the operation signal.

MRM executer 14 causes mobile body 10 to execute MRM in response to, e.g., the detection of a delay. MRM is an example of a predetermined operation.

Adder 15 adds predetermined information to the mobile body information. For example, the predetermined information added by adder 15 to the mobile body information may be an electronic signature to be verified with a decryption key held by mobile body 10. An example of the electronic signature may be a hash value calculated with a hash function. Alternatively, adder 15 may add a counter (a counter value) as the predetermined information to the mobile body information. The predetermined information added by adder 15 is, in turn, added (reassigned) to the operation signal by terminal 30 and returned to mobile body 10.

Verifier 16 performs verification using the predetermined information in the received operation signal. If the predetermined information is an electronic signature, verifier 16 verifies whether the electronic signature in the operation signal is the electronic signature issued by this mobile body 10 (e.g., whether the two electronic signatures match). If the predetermined information is a counter, verifier 16 verifies whether the operation signal is received in the order indicated by the counter.

Mobile body information obtainment delay corrector 17a estimates a time period required to obtain the mobile body information and corrects the mobile body information obtainment time. Mobile body information obtainment delay corrector 17a estimates an imaging delay as illustrated in FIG. 1 and, based on the estimated imaging delay, corrects the mobile body information obtainment time in the mobile body information.

Operation signal execution delay corrector 17b estimates a time period required to execute the operation signal and corrects the mobile body information obtainment time. Operation signal execution delay corrector 17b estimates an execution delay as illustrated in FIG. 1 and, based on the estimated execution delay, corrects the mobile body information obtainment time in the operation signal.

Decryptor 18a decrypts the operation signal based on a decryption key.

Vehicle encryptor 18b generates a pair of an encryption key and a decryption key to encrypt the mobile body information obtainment time to be added to a video, and to transmit the encryption key to terminal 30.

Time manager 19 continuously outputs highly accurate time in synchronization with a system such as the Global Positioning System (GPS). Further, time manager 19 detects a time deviation of the internal time of mobile body 10 from the highly accurate time and provides a notification of the time deviation.

It is to be noted that mobile body 10 may include at least mobile body information transmitter 11b, operation signal receiver 11c, and delay determiner 12. For example, mobile body 10 may include mobile body information obtainer 11a, mobile body information transmitter 11b, operation signal receiver 11c, delay determiner 12, operation signal executer 13, and MRM executer 14. Further, components of mobile body 10 implement a delay detection device. The delay detection device may include at least mobile body information transmitter 11b, operation signal receiver 11c, and delay determiner 12.

Supervision server 20 is an information processing device communicatively connected to mobile body 10 and terminal 30. Supervision server 20 may be a cloud server or a local server.

Supervision server 20 includes: functional components, implemented by a unit such as a CPU or an MPU, that perform processing; and memory units, such as ROM and RAM, that store programs for causing the functional components to perform various sorts of processing. Further, supervision server 20 includes, as its functional components, supervision state manager 21, mobile body information transferer 22, and operation signal transferer 23.

Supervision state manager 21 determines which terminal 30 and mobile body 10 exchange mobile body information and operation signals. For example, supervision state manager 21 determines destination terminal 30 based on destination information in mobile body information, and determines destination mobile body 10 based on destination information in an operation signal.

Mobile body information transferer 22 transfers the mobile body information to the designated terminal 30 based on the determination made by supervision state manager 21.

Operation signal transferer 23 transfers the operation signal to the designated mobile body 10 based on the determination made by supervision state manager 21.

Terminal 30 is a terminal device for remote operation that is connected to input device 40 (see diagrams such as FIG. 12 to be described below) used by an operator for inputting operations during remote operation, and to supervision server 20, and that transmits and receives information necessary for remote operation. As an example, terminal 30 performs processing of displaying, to the operator, a video in mobile body information received from mobile body 10. As another example, terminal 30 performs processing of transmitting an operation signal from input device 40 to mobile body 10. Terminal 30 in the present embodiment is characterized by: adding, to an operation signal indicating an operation inputted by the operator to input device 40 with respect to mobile body information received from mobile body 10, a mobile body information obtainment time included in the mobile body information; and transmitting the operation signal to mobile body 10.

Terminal 30 includes: functional components, implemented by a unit such as CPU or an MPU, that perform processing; and memory units, such as ROM and RAM, that store programs for causing the functional components to perform various sorts of processing. Further, terminal 30 includes, as its functional components, mobile body information receiver 31a, operation signal receiver 31b, operation signal transmitter 32, mobile body information displayer 33a, delay time displayer 33b, display delay corrector 34a, operation signal obtainment delay corrector 34b, operator response delay corrector 34c, remote operation switcher 35, and encryptor 36.

Mobile body information receiver 31a receives mobile body information and extracts a mobile body information obtainment time from the mobile body information.

Operation signal receiver 31b is communicatively connected to input device 40 and receives an operation signal from input device 40.

Operation signal transmitter 32 adds the mobile body information obtainment time extracted by mobile body information receiver 31a to the operation signal and transmits the operation signal to mobile body 10.

Mobile body information displayer 33a displays the mobile body information on a screen. In the present embodiment, mobile body information displayer 33a displays video. Mobile body information displayer 33a is a monitor implemented by, for example and without limitation, a liquid crystal display device. It is to be noted that displaying is an example of presenting. Presenting may be displaying or may be producing sound or emitting light.

Delay time displayer 33b displays a delay time (e.g., a round-trip delay time) on a screen. Delay time displayer 33b is a monitor implemented by, for example and without limitation, a liquid crystal display device. It is to be noted that delay time displayer 33b and mobile body information displayer 33a may be integrated into a single display device.

Display delay corrector 34a estimates a delay between the reception of the mobile body information and the display of the mobile body information on the screen of mobile body information displayer 33a, and corrects the mobile body information obtainment time extracted by mobile body information receiver 31a. This correction is performed for delay determination that reflects a display delay as illustrated in FIG. 1.

Operation signal obtainment delay corrector 34b estimates a delay involved in the processing of operation signal transmission from input device 40, and corrects the mobile body information obtainment time extracted by mobile body information receiver 31a. This correction is performed for delay determination that reflects a signal obtainment delay as illustrated in FIG. 1.

Operator response delay corrector 34c estimates the operator's response delay and corrects the mobile body information obtainment time extracted by mobile body information receiver 31a. This correction is performed for delay determination that reflects a response delay as illustrated in FIG. 1.

Remote operation switcher 35 receives a signal from a switching button of a controller (not shown) and transmits a remote control switching signal to mobile body 10. The controller may be included in input device 40, for example. The remote control switching signal is a signal that instructs to switch from self-driving to driving based on remote control (e.g., remote operation).

Encryptor 36 generates an encryption key and a decryption key and encrypts the operation signal.

Further, remote control system 1 may include input device 40 for the operator to provide inputs for remote operation. Input device 40 is communicatively connected to terminal 30 and includes, for example, at least one of a handle, a brake, and an accelerator.

### [1-2. Operation of remote control system]

Now, operations of remote control system 1 configured as above will be described with reference to FIGS. 3 to 11. First, an overview of operations in remote control system 1 will be described with reference to FIG. 3. FIG. 3 is a diagram for describing an overview of operations (the delay detection method) of remote control system 1 according to the present embodiment.

As illustrated in FIG. 3, mobile body 10 adds a mobile body information obtainment time to mobile body information (S1) and transmits, to terminal 30, the mobile body information with the mobile body information obtainment time added thereto (S2). The mobile body information obtainment time is an example of first time information.

Terminal 30 receives the mobile body information through mobile body information transfer system N (S3), reassigns the mobile body information obtainment time to an operation signal that is from input device 40 and corresponding to the received mobile body information (S4), and transmits the operation signal (S5). Supervision server 20 transmits the operation signal from terminal 30 to mobile body 10 (S6). Mobile body 10 verifies the mobile body information obtainment time in the operation signal (S7). The mobile body information obtainment time in the operation signal is an example of second time information.

Thus, associating the mobile body information (e.g., each frame of a video) with the operation signal and measuring a round-trip delay allows measuring the total transfer delay of the operation signal issued based on the video frame actually viewed by the operator. For example, this allows verifying how many seconds ago the video corresponding to the operation signal received at step S6 was captured at mobile body 10. For example, mobile body 10 calculates the delay time (the total transfer delay) between steps S2 and S6 from the mobile body information obtainment time in the operation signal and the current time, and detects a delay based on whether the delay time is not longer than a threshold. In other words, mobile body 10 performs delay determination. The delay determination is performed by mobile body 10 using the mobile body information obtainment time added by mobile body 10, thus eliminating the need for processing such as, for example, time synchronization between mobile body 10 and terminal 30. The current time is an example of the predetermined time.

Hereinafter, operations in remote control system 1 will further be described with reference to diagrams including FIG. 4. FIG. 4 is a sequence diagram illustrating operations (the delay detection method) of remote control system 1 according to the present embodiment. FIG. 4 illustrates operations in which MRM is executed if the sum of "the time period from when mobile body information is obtained from mobile body 10 to when the mobile body information is displayed to the operator" and "the time period from when the operator performs an operation to when the operation is reflected in mobile body 10" fails to be less than a certain length of time. Further, the sequence diagram illustrated in FIG. 4 is a diagram in which remote operation is being performed. Similarly, subsequent sequence diagrams are diagrams in which remote operation is being performed unless otherwise specified.

As illustrated in FIG. 4, mobile body information obtainer 11a in mobile body 10 obtains mobile body information from a source such as a camera and adds, to the mobile body information, an obtainment time in the mobile body (a mobile body information obtainment time) (time A), which is the time at which the mobile body information was obtained (S11).

Next, mobile body information transmitter 11b transfers, to terminal 30, the mobile body information with time A added thereto (S12). Mobile body information transmitter 11b transmits the mobile body information to terminal 30 through wireless communication.

Next, mobile body information receiver 31a in terminal 30 receives the mobile body information transmitted by mobile body information transmitter 11b, and holds time A obtained from the received mobile body information (S13).

Next, mobile body information displayer 33a displays the mobile body information (S14). For example, mobile body information displayer 33a displays a video as the mobile body information. The operator checks the video on mobile body information displayer 33a, and performs an operation on input device 40 as necessary for remote operation.

Next, operation signal receiver 31b obtains, from input device 40, an operation signal for mobile body 10, corresponding to the video displayed at step S14 (S15).

Next, operation signal transmitter 32 adds time A obtained at step S13 to the operation signal (S16) and transfers the operation signal (S17). Operation signal transmitter 32 transmits the operation signal to mobile body 10 through wireless communication.

Next, operation signal receiver 11c receives the operation signal from terminal 30 and extracts time A from the received operation signal (S18).

Next, based on time A extracted from the operation signal, delay determiner 12 determines whether the operation signal is delayed (whether an operation signal delay has occurred) (S19). Delay determiner 12 determines whether a delay has occurred based on whether a difference time obtained by subtracting time A from the current time is greater than a specified value (a threshold). If the difference time is greater than the specified value, delay determiner 12 determines that a delay has occurred; otherwise, delay determiner 12 determines that no delay has occurred.

It is to be noted that delay determiner 12 repeats the processing at step S19 until the end of the remote operation. For example, delay determiner 12 regularly calculates the difference between the mobile body information obtainment time in the most recently received operation signal and the current time.

If delay determiner 12 determines that a delay has occurred, MRM executer 14 executes MRM for safety, because the received operation signal may correspond to an operation performed by the operator looking at a video captured at an earlier time (S20).

If delay determiner 12 determines that the delay of the operation signal is not greater than the specified value, operation signal executer 13 executes the operation signal (S21). Operation signal executer 13 causes mobile body 10 to perform an operation indicated by the operation signal. The operation is, for example and without limitation, changing the speed or the steering angle.

It is to be noted that, if mobile body 10 is remotely controllable by multiple terminals 30, mobile body 10 may transmit an operator notification signal (see FIG. 11 to be described below) to multiple terminals 30 at any time point during steps S11 to S21 illustrated in FIG. 4.

Now, the outlines (concepts) of the process steps illustrated in FIG. 4 will be described with reference to FIGS. 5A to 5E. FIG. 5A is a flowchart illustrating a first operation (the delay detection method) in mobile body 10 according to the present embodiment. FIG. 5A illustrates operations of mobile body 10 in obtaining and transmitting the mobile body information. FIG. 5A corresponds to steps S11 and S12 illustrated in FIG. 4.

As illustrated in FIG. 5A, mobile body information obtainer 11a obtains the mobile body information from a source such as a camera (S31a), and adds, to the mobile body information, the mobile body information obtainment time (time A) at which the mobile body information was obtained (S32a). Then, mobile body information transmitter 11b transmits, to terminal 30, the mobile body information with time A added thereto (S33a).

FIG. 5B is a flowchart illustrating a second operation (the delay detection method) in terminal 30 according to the present embodiment. FIG. 5B illustrates operations of terminal 30 in receiving the mobile body information. FIG. 5B corresponds to steps S13 and S14 illustrated in FIG. 4.

As illustrated in FIG. 5B, mobile body information receiver 31a receives the mobile body information from mobile body 10 (S41a) and holds the mobile body information obtainment time extracted from the received mobile body information (S42a).

Next, mobile body information displayer 33a displays the mobile body information on the screen (S43a).

FIG. 5C is a flowchart illustrating a third operation (the delay detection method) in terminal 30 according to the present embodiment. FIG. 5C illustrates operations of terminal 30 in transmitting the operation signal. FIG. 5C corresponds to steps S15 to S17 illustrated in FIG. 4.

As illustrated in FIG. 5C, operation signal receiver 31b receives the operation signal from input device 40 (S51a) and adds the latest mobile body information obtainment time to the operation signal (S52a). Then, operation signal transmitter 32 transmits the operation signal to mobile body 10 (S53a).

FIG. 5D is a flowchart illustrating a fourth operation (the delay detection method) in mobile body 10 according to the present embodiment. FIG. 5D illustrates operations of mobile body 10 in receiving the operation signal. FIG. 5D corresponds to step S18 illustrated in FIG. 4.

As illustrated in FIG. 5D, operation signal receiver 11c receives the operation signal from terminal 30 (S61a) and holds the mobile body information obtainment time extracted from the operation signal (S62a).

FIG. 5E is a flowchart illustrating a fifth operation (the delay detection method) in mobile body 10 according to the present embodiment. FIG. 5E illustrates operations of delay determination in mobile body 10. FIG. 5E corresponds to steps S19 and S20 illustrated in FIG. 4.

As illustrated in FIG. 5E, delay determiner 12 compares the latest mobile body information obtainment time held and the current time (S71a).

If delay determiner 12 determines that "the current time - the mobile body information obtainment time > a specified value" is satisfied (yes at S72a), MRM executer 14 executes MRM (S73a). Conversely, if delay determiner 12 determines that "the current time - the mobile body information obtainment time > the specified value" is not satisfied (no at S72a), the process returns to step S71a to continue until the end of the remote operation.

Now, specific examples of the process steps illustrated in FIG. 4 will be described with reference to FIGS. 6A to 6E. FIG. 6A is a flowchart illustrating a specific example of the first operation (the delay detection method) in mobile body 10 according to the present embodiment. FIGS. 6A to 6E illustrate specific examples in which the mobile body information is a camera-captured video, Web Real-Time Communication (WebRTC) is used as the video transfer protocol for the camera-captured video, and JavaScript Object Notation (Json) or Protocol Buffers is used for serialization of the operation signal.

FIG. 6A illustrates operations of mobile body 10 in obtaining and transmitting a video stream. FIG. 6A corresponds to steps S11 and S12 illustrated in FIG. 4.

As illustrated in FIG. 6A, mobile body information obtainer 11a receives a video stream as the mobile body information from a source such as a camera (S31b) and updates a video obtainment timestamp in the memory to the reception time of step S31b (S32b). Updating the video obtainment timestamp in the memory means updating the video obtainment timestamp to be added to the mobile body information. The video obtainment timestamp is an example of the mobile body information obtainment time.

Next, mobile body information transmitter 11b encodes the video stream (S33b) and adds the video obtainment timestamp to frame data (S34b). Adding the video obtainment timestamp to the frame data is an example of adding the mobile body information obtainment time to the mobile body information.

Next, mobile body information transmitter 11b divides the frame data into Real-time Transport Protocol (RTP) packets (S35b) and transmits the video packets to terminal 30 (S36b).

FIG. 6B is a flowchart illustrating a specific example of the second operation in terminal 30 according to the present embodiment. FIG. 6B corresponds to steps S13 and S14 illustrated in FIG. 4.

As illustrated in FIG. 6B, mobile body information receiver 31a receives the video stream from mobile body 10 (S41b), constructs the frame data (data for one screen) from the received RTP packets (S42b), extracts the timestamp from the frame data (S43b), and updates a timestamp in the memory (S44b). Updating the timestamp in the memory means updating a timestamp to be added to the operation signal. Further, mobile body information receiver 31a decodes the frame data (S45b).

Next, mobile body information displayer 33a displays the video based on the decoded frame data (S46b). Thus, the video, i.e., the state of mobile body 10, can be presented to the operator.

FIG. 6C is a flowchart illustrating a specific example of the third operation (the delay detection method) in terminal 30 according to the present embodiment. FIG. 6C corresponds to steps S15 to S17 illustrated in FIG. 4.

As illustrated in FIG. 6C, operation signal receiver 31b receives operation packets as the operation signal from input device 40 (S51b), deserializes the operation packets (S52b), and adds the timestamp in the memory to the operation information (the operation signal) (S53b). Then, operation signal transmitter 32 serializes the operation information (S54b), divides the operation information into packets (S55b), and transmits the operation packets to mobile body 10 (S56b).

FIG. 6D is a flowchart illustrating a specific example of the fourth operation (the delay detection method) in mobile body 10 according to the present embodiment. FIG. 6D corresponds to step S18 illustrated in FIG. 4.

As illustrated in FIG. 6D, operation signal receiver 11c receives the operation packets as the operation signal from terminal 30 (S61b), deserializes the operation packets (S62b), extracts the timestamp from the operation signal (S63b), and updates the timestamp in the memory (S64b).

FIG. 6E is a flowchart illustrating a specific example of the fifth operation (the delay detection method) in mobile body 10 according to the present embodiment. FIG. 6E corresponds to steps S19 to S21 illustrated in FIG. 4.

As illustrated in FIG. 6E, delay determiner 12 compares the timestamp in the memory and the current time (S71b).

If delay determiner 12 determines that "the current time - the timestamp (the mobile body information obtainment time) > a specified value" is satisfied (yes at S72b), MRM executer 14 executes MRM (S73b). Conversely, if delay determiner 12 determines that "the current time - the timestamp > the specified value" is not satisfied (no at S72b), operation signal executer 13 executes the operation signal (S74b), and the process returns to step S71b to continue until the end of the remote operation.

FIG. 7 is a diagram for describing the details of operations (the delay detection method) of remote control system 1 according to the present embodiment. FIG. 7 illustrates the sequence of reassigning the timestamp in terminal 30. Specifically, FIG. 7 illustrates a timing chart of video frame reception timing, video rendering, the timestamp in the memory, operation signal transmission, and operation signal reception timing, with no display delay or no signal obtainment delay. Further, FIG. 7 illustrates an example in which frames are received in the order of frame A, frame B, frame C, and frame D.

Upon reception of frame A, frame A is rendered, and the timestamp in the memory is updated to the timestamp of frame A. The timestamp of frame A is held until frame B is received. An operation signal received from input device 40 between the reception of frame A and the reception of frame B is given the timestamp of frame A, because the operation signal is considered to correspond to an operation that the operator performs while checking the video of frame A. Then, the operation signal with the timestamp of frame A is transmitted to mobile body 10.

Upon reception of frame B, the video switches to the rendering of frame B, and the timestamp in the memory is updated to the timestamp of frame B.

Further, each operation signal received from input device 40 between the reception of frame C and the reception of frame D is given the timestamp of frame C, because the operation signal is considered to correspond to an operation that the operator performs while checking the video of frame C.

Here, exemplary messages of signals will be described with reference to FIGS. 8 to 11. FIG. 8 is a diagram illustrating an exemplary message of an operation signal according to the present embodiment. FIGS. 8 to 11 illustrate examples in which Real-time Transport Control Protocol (RTCP) is used.

The items V = 2, P, IC, PT = APP = 204, and length L shown in FIG. 8 are common to the messages. For convenience, "PT = APP = 204" is shown as "PT = APP" in FIG. 8.

"SSRC of RTP packet sender" stores the identifier of terminal 30 (the video recipient). This identifier is used by mobile body 10 to reject operations performed by entities other than terminal 30 that has the right to control that mobile body 10.

"RCMD (ASCII)" stores the message name. Here, this item stores information indicating that the signal is an operation signal.

"Received frame border RTP timestamp" stores the transmission timestamp (Unix time) of received mobile body information (e.g., the mobile body information obtainment time added by mobile body 10 to the mobile body information). For example, this item stores a timestamp embedded in RTP packets using a tool such as Insertable stream.

"SSRC of RTP packet sender" stores the identifier of mobile body 10 (the video sender). This identifier is used by mobile body 10 to determine whether the operation signal is from terminal 30 corresponding to an operator looking at a video transmitted from that mobile body 10.

"sequence number" stores a sequence number. The sequence number is used to check whether the message is transmitted in order.

"Control message" stores a control value, such as an accelerator value or a handle angle.

It is to be noted that RTCP allows custom items to be included in messages. In the present disclosure, this message includes the item "Received frame border RTP timestamp," which stores the timestamp included in the mobile body information (the mobile body information obtainment time), i.e., the timestamp added by mobile body 10.

FIG. 9 is a diagram illustrating an exemplary message of an operation start signal according to the present embodiment. An operation start signal is transmitted from terminal 30 to mobile body 10 at the start of remote operation.

"SSRC of packet sender" stores the identifier of terminal 30 (the video recipient). Here, this item stores the identifier of terminal 30 that requests the right to control mobile body 10.

"RREQ (ASCII)" stores the message name. Here, this item stores information indicating the start of remote operation.

FIG. 10 is a diagram illustrating an exemplary message of an operation end signal according to the present embodiment. An operation end signal is transmitted from terminal 30 to mobile body 10 at the end of remote operation.

"SSRC of packet sender" stores the identifier of terminal 30 (the video recipient). Here, this item stores the identifier of terminal 30 that abandons the right to control mobile body 10.

"REND (ASCII)" stores the message name. Here, this item stores information indicating the end of remote operation.

FIG. 11 is a diagram illustrating an exemplary message of an operator notification signal according to the present embodiment. When multiple terminals 30 are authorized to remotely operate mobile body 10 and one of them is remotely operating mobile body 10, this signal is transmitted from mobile body 10 to the other terminals 30. Mobile body 10 can be remotely operated by only one terminal 30 at any time. Therefore, when mobile body 10 is being remotely operated by one terminal 30, an operator notification signal is transmitted to notify the other terminals 30 that mobile body 10 is being remotely operated.

"SSRC of packet sender" stores the identifier of mobile body 10 (the video sender).

"ROPR (ASCII)" stores the message name. Here, this item stores information indicating that this is a message notifying which terminal 30 is remotely operating mobile terminal 10.

"SSRC of control RTCP packet sender" stores the identifier of the operator. Here, this item stores information indicating which video recipient is remotely operating mobile body 10. The video recipient refers to the operator corresponding to terminal 30 receiving mobile body information from mobile body 10. In other words, this item stores information indicating which operator's operation packets are being received by mobile body 10.

### [Embodiment 2]

Hereinafter, a delay detection method, and so on, according to the present embodiment will be described with reference to FIG. 12. It is to be noted that description will be carried out focusing on the points of difference with Embodiment 1, and description of details that are the same or similar to those in Embodiment 1 will be omitted or simplified. Moreover, in each of the embodiments and variations following Embodiment 2, the configuration of the respective elements of the remote control system may be the same as those in the remote control system according to Embodiment 1, and description will be carried out using the reference signs used in Embodiment 1.

FIG. 12 is a sequence diagram illustrating operations (the delay detection method) of remote control system 1 according to the present embodiment. FIG. 12 describes an example in which MRM is executed if no operation signal is received for a certain time period since the reception of an operation signal.

As illustrated in FIG. 12, operation signal receiver 11c in mobile body 10 holds an operation signal reception time (time B), which is the time at which the operation signal is received (S81).

Then, based on time B, delay determiner 12 determines whether an operation signal delay has occurred until the next control signal (operation signal) arrives or until MRM is executed (S82). Delay determiner 12 performs this determination based on whether "the current time - time B > a specified value" is satisfied. If "the current time - time B > the specified value" is satisfied, delay determiner 12 determines that an operation signal delay has occurred; otherwise, delay determiner 12 determines that no operation signal delay has occurred.

If delay determiner 12 determines that an operation signal delay has occurred, MRM executer 14 executes MRM (S83).

Thus, the present embodiment involves control to execute MRM if the sum of "the time period from when mobile body information is obtained from mobile body 10 to when the mobile body information is presented to the operator" and "the time period from when the operator performs an operation to when the operation is reflected in mobile body 10" fails to be less than a certain length of time (a specified value).

### [Embodiment 3]

Hereinafter, a delay detection method and so on according to the present embodiment will be described with reference to FIG. 13. FIG. 13 is a sequence diagram illustrating operations (the delay detection method) of remote control system 1 according to the present embodiment. FIG. 13 describes an example in which, on the occurrence of a delay above a certain degree, mobile body 10 ignores the operation signal rather than executing MRM.

As illustrated in FIG. 13, if delay determiner 12 determines that the delay of the operation signal is not greater than the specified value, i.e., that the operation signal is not delayed, operation signal executer 13 executes the operation signal (S21). Operation signal executer 13 causes mobile body 10 to perform an operation indicated by the operation signal.

If delay determiner 12 determines that the delay of the operation signal is greater than the specified value, i.e., that the operation signal is delayed, operation signal executer 13 ignores the operation signal. For example, if it is determined that the operation signal is delayed, operation signal executer 13 ignores a control command in the received operation signal. That is, if it is determined that the operation signal is delayed, operation signal executer 13 does not control mobile body 10 according to the operation signal. Ignoring the operation signal is an example of the predetermined operation.

It is to be noted that mobile body 10 according to the present embodiment need not include MRM executer 14.

### [Embodiment 4]

Hereinafter, a delay detection method and so on according to the present embodiment will be described with reference to FIGS. 14 to 18. FIG. 14 is a sequence diagram illustrating operations (the delay detection method) of remote control system 1 according to the present embodiment. The present embodiment describes an example in which a mobile body information obtainment delay (an imaging delay) and a monitor display delay are taken into account.

As illustrated in FIG. 14, mobile body information obtainment delay corrector 17a in mobile body 10 estimates a mobile body information obtainment delay and corrects time A1 (S91). Mobile body information obtainment delay corrector 17a corrects time A1 to the time earlier by the length of the mobile body information obtainment delay. For example, if time A1 is 10:00 and the mobile body information obtainment delay is one minute, mobile body information obtainment delay corrector 17a calculates time A2 by correcting time A1 to 9:59. It is to be noted that, although such a long delay as one minute is unlikely to occur in reality, one minute is illustrated here for the sake of description.

Time A2 in the present embodiment is an example of the first time information. The first time information may include time A2, which is time A1 corrected, such that time A1 at which mobile body 10 obtained predetermined information (e.g., a camera-captured video) included in the mobile body information is corrected based on the time period required to obtain the predetermined information (e.g., an imaging delay).

Mobile body information receiver 31a in terminal 30 receives the mobile body information and holds time A2 obtained from the received mobile body information (S92).

Upon display of the mobile body information (S14), display delay corrector 34a estimates a display delay and corrects time A2 (S93). Display delay corrector 34a calculates time A3 by correcting time A2 to the time earlier by the length of the display delay.

Time A3 in the present embodiment may be an example of the second time information. The second time information may include time A2 corrected based on the time period from when terminal 30 receives the mobile body information to when the mobile body information is displayed (a display delay).

Operation signal transmitter 32 adds time A3 to the operation signal (S94).

Next, operator response delay corrector 34c estimates an operator response delay and corrects time A3 (S95). Operator response delay corrector 34c calculates time A4 by correcting time A3 to the time earlier by the length of the operator response delay.

Next, operation signal obtainment delay corrector 34b estimates an operation signal obtainment delay and corrects time A4 (S96). Operation signal obtainment delay corrector 34b calculates time A5 by correcting time A4 to the time earlier by the length of the operation signal obtainment delay.

Operation signal receiver 11c in mobile body 10 receives the operation signal from terminal 30 and extracts time A5 from the received operation signal (S97).

Next, operation signal execution delay corrector 17b corrects time A5 to reflect an operation signal execution delay, and holds the result (S98). Operation signal execution delay corrector 17b estimates the operation signal execution delay and corrects time A5. Operation signal execution delay corrector 17b calculates time A6 by correcting time A5 to the time earlier by the length of the operation signal execution delay.

In the present embodiment, time A5 may be an example of the second time information, and time A6 may be an example of the second time information corrected. The corrected second time information is calculated by correcting the second time information based on the time period from the reception of the operation signal to the completion of control according to the operation signal in mobile body 10.

Next, based on time A6, delay determiner 12 determines whether the operation signal is delayed (whether an operation signal delay has occurred) (S99).

FIG. 15A is a flowchart illustrating an example of operations (the delay detection method) of remote control system 1 according to the present embodiment.

As illustrated in FIG. 15A, mobile body 10 obtains the mobile body information obtainment time (S101). For example, mobile body information obtainer 11a obtains, as the mobile body information obtainment time, the time at which the mobile body information is obtained from a source such as a camera.

Next, mobile body 10 obtains an estimated delay time (S102).

FIG. 15B is a diagram illustrating estimated delay times for different types of delays according to the present embodiment. The system may be unable to exactly measure delays such as a mobile body information obtainment delay and a display delay (a screen rendering delay in the terminal). To address this, the present embodiment estimates, based on the table illustrated in FIG. 15B, time periods such as the time period required to obtain the mobile body information (a mobile body information obtainment delay), the time period from when terminal 30 obtains the information to when terminal 30 renders the information on the screen (a display delay), and the time period required for the mobile body to execute the operation signal (an operation signal execution delay).

As illustrated in FIG. 15B, each delay type is associated with a delay time in advance. The delay time is a fixed value, for example. This allows estimating a rough delay time for each delay type.

Mobile body information obtainment delay corrector 17a, display delay corrector 34a, operator response delay corrector 34c, operation signal obtainment delay corrector 34b, and operation signal execution delay corrector 17b estimate their corresponding delay times based on, for example, the table illustrated in FIG. 15B.

Referring again to FIG. 15A, mobile body 10 rolls back the mobile body information obtainment time (time A) by the estimated delay time (S103). Mobile body information obtainment delay corrector 17a, display delay corrector 34a, operator response delay corrector 34c, operation signal obtainment delay corrector 34b, and operation signal execution delay corrector 17b each perform processing of rolling back the received or corrected mobile body information obtainment time by the estimated delay time obtained at step S102.

FIG. 16 is a flowchart illustrating another example of operations (the delay detection method) of remote control system 1 according to the present embodiment. In FIG. 16, the delay is reflected by pushing back the update timing of the timestamp in the memory, rather than by correcting the mobile body information obtainment time according to the delay.

As illustrated in FIG. 16, after mobile body 10 obtains the estimated delay time (S102), mobile body 10 waits for the estimated delay time (S104) and updates the mobile body information obtainment time in the memory (S105).

Steps S104 and S105 illustrated in FIG. 16 will be described with reference to FIGS. 17 and 18. FIG. 17 is a diagram for describing the details of another example of operations (the delay detection method) of remote control system 1 according to the present embodiment. FIG. 17 illustrates the sequence of reassigning the timestamp in terminal 30 in which display delay t1 in mobile body information displayer 33a is taken into account.

As illustrated in FIG. 17, if display delay t1 has occurred, a frame is rendered after display delay t1 following the reception of the frame. That is, after the reception of a new frame, the operator is looking at the video of the immediately preceding frame during display delay t1. Therefore, the timestamp of the immediately preceding frame is given to an operation performed during display delay t1 following the reception of the new frame.

Frame B is taken as an example for description. After the reception of frame B, mobile body information receiver 31a waits for display delay t1 obtained according to FIG. 15B, and after the lapse of display delay t1, updates the timestamp of frame A in the memory to the timestamp of frame B. Thus, mobile body information receiver 31a pushes back the processing of updating the timestamp in the memory to the timestamp of a new frame until the start of rendering of the new frame on the screen. For example, mobile body information receiver 31a performs processing of synchronizing the start of rendering frame B and the update of the timestamp to the timestamp of frame B.

In this case, if, for example, the operator performs an operation between the reception of frame B and the end of display delay t1, the timestamp of frame A is given to the corresponding operation signal.

FIG. 18 is a diagram for describing the details of still another example of operations (the delay detection method) of remote control system 1 according to the present embodiment. FIG. 18 illustrates the sequence of reassigning the timestamp in terminal 30 in which, in addition to display delay t1 at mobile body information displayer 33a, response delay t2 at the operator, and a delay at input device 40 (signal obtainment delay t3) are taken into account.

As illustrated in FIG. 18, if display delay t1, response delay t2, and signal obtainment delay t3 have occurred, a frame is rendered after display delay t1 following the reception of the frame. In addition, operation signal receiver 31b receives an operation signal further after response delay t2 and signal obtainment delay t3 from the display of the video. Therefore, after the reception of a new frame, the timestamp of the immediately preceding frame is given to an operation performed during display delay t1, response delay t2, and signal obtainment delay t3.

Frame C is taken as an example for description. After the reception of frame C, mobile body information receiver 31a waits for display delay t1, response delay t2, and signal obtainment delay t3 obtained according to FIG. 15B. After the lapse of display delay t1, response delay t2, and signal obtainment delay t3, mobile body information receiver 31a updates the timestamp of frame B in the memory to the timestamp of frame C. Thus, mobile body information receiver 31a pushes back the processing of updating the timestamp to the timestamp of frame C until the lapse of display delay t1, response delay t2, and signal obtainment delay t3. For example, the timestamp of frame B is given to an operation signal received between the start of the rendering of frame C on the screen and the end of response delay t2 and signal obtainment delay t3.

### (Variation 1 of Embodiment 4)

Hereinafter, a delay detection method and so on according to the present variation will be described with reference to FIGS. 19A to 20. FIG. 19A is a flowchart illustrating an example of operations (the delay detection method) of remote control system 1 according to the present variation. The present variation describes updating the timestamp in the case of a low frame rate.

It is to be noted that control in the present variation is based on the assumption that, at frame rates below a certain level, people can predict movements in their minds (inter-frame prediction), thereby performing accurate operations without taking delays into account.

As illustrated in FIG. 19A, mobile body information receiver 31a determines whether a certain time period has elapsed since the reception of the last mobile body information (including a virtual frame) (S111), and if so (yes at S111), performs processing of advancing, by a specified length of time, the delay time for the last mobile body information obtainment time stored in the memory (S112). If mobile body information receiver 31a determines that the certain time period has not elapsed (no at S111), the process terminates.

FIG. 19B is a flowchart illustrating another example of operations (the delay detection method) of remote control system 1 according to the present variation.

As illustrated in FIG. 19B, if mobile body information receiver 31a determines that a certain time period has elapsed (yes at S111), terminal 30 obtains a time advanced by a specified length of time from the last mobile body information obtainment time stored in the memory (S113).

Next, terminal 30 obtains an estimated delay time based on, for example, the table illustrated in FIG. 15B (S114), waits for the estimated delay time (S115), and updates the mobile body information obtainment time in the memory (S116). In step S116, terminal 30 updates the mobile body information obtainment time in the memory to the time advanced by the specified length of time from the last mobile body information obtainment time.

FIG. 20 is a diagram for describing the details of another example of operations (the delay detection method) of remote control system 1 according to the present variation. FIG. 20 illustrates a timing chart in which display delay t1 has occurred as the delay time, and it is determined that a certain time period has elapsed at time T since the reception of frame B.

People can predict movements between frames. Therefore, as illustrated in FIG. 20, if it is determined that the certain time period has elapsed at time T, mobile body information receiver 31a updates the timestamp by assuming that virtual frame B1 is received at time T. It is to be noted that no update occurs to video rendering at time T.

In this case, the timestamp of frame B1 is given to an operation signal received between the end of display delay t1 following time T and the end of display delay t1 following the reception of next frame C. This can prevent a long delay. For example, this can prevent accidental frame drop from being erroneously detected as a delay when no abnormality has occurred (e.g., when a delay smaller than the specified value has occurred).

### (Variation 2 of Embodiment 4)

Hereinafter, a delay detection method and so on according to the present variation will be described with reference to FIGS. 21A and 21B. FIG. 21A is a flowchart illustrating an example of operations (the delay detection method) of remote control system 1 according to the present variation. The present variation describes updating the timestamp in the case of a low frame rate.

It is to be noted that control in the present variation is based on the assumption that, at frame rates below a certain level, people can predict movements in their minds (inter-frame prediction), thereby performing accurate operations without taking delays into account.

As illustrated in FIG. 21A, mobile body information receiver 31a determines whether frame drop has occurred (S121), and if so (yes at S121), performs processing of advancing, by a specified length of time, the delay time for the last mobile body information obtainment time stored in the memory (S112). If mobile body information receiver 31a determines that no frame drop has occurred (no at S121), the process terminates.

FIG. 21B is a flowchart illustrating another example of operations (the delay detection method) of remote control system 1 according to the present variation.

As illustrated in FIG. 21B, if mobile body information receiver 31a determines that frame drop has occurred (yes at S121), mobile body information receiver 31a performs processing at step S113 and subsequent steps illustrated in FIG. 19B (S113 to S116).

The timing chart in the present variation is similar to the timing chart illustrated in FIG. 20. If frame drop occurs at time T, the timestamp is updated under the assumption that virtual frame B1 is received at time T.

### [Embodiment 5]

Hereinafter, a delay detection method and so on according to the present embodiment will be described with reference to FIG. 22. FIG. 22 is a sequence diagram illustrating operations (the delay detection method) of remote control system 1 according to the present embodiment. The present embodiment describes an example of determining whether the operator is remotely controlling mobile body 10 while looking at mobile body information transmitted by that mobile body 10.

As illustrated in FIG. 22, adder 15 in mobile body 10 adds electronic signature information "a" to the mobile body information (S131). Electronic signature information "a" added to the mobile body information is an example of first signature information.

Mobile body information receiver 31a in terminal 30 receives the mobile body information and holds time A and electronic signature information "a" obtained from the received mobile body information (S132). Further, operation signal transmitter 32 adds, to the operation signal, time A and electronic signature information "a" held at step S132 (S133), and transfers, to mobile body 10, the operation signal with time A and electronic signature information "a" added thereto (S17).

Next, operation signal receiver 11c in mobile body 10 receives the operation signal from terminal 30 and extracts time A and electronic signature information "a" from the received operation signal (S134). Electronic signature information "a" extracted from the operation signal is an example of second signature information.

Next, based on electronic signature information "a" added to mobile body information, verifier 16 verifies electronic signature information "a" extracted at step S134 (S135). This is verification for determining whether the operator is remotely controlling mobile body 10 while looking at the mobile body information transmitted by that mobile body 10; for example, verifier 16 determines whether the first signature information matches the second signature information. MRM executer 14 executes MRM if the operation signal is delayed or if the verification of electronic signature information "a" fails (S20).

Thus, verifying electronic signature information "a" can detect any operation signal transmitted to mobile body 10 from the operator looking at a video transmitted by a mobile body different from mobile body 10. If the operator is looking at a video of a mobile body different from mobile body 10, the operation may be unsuitable for mobile body 10. MRM can then be executed to ensure the safety of mobile body 10.

It is to be noted that the second signature information may be transmitted from terminal 30 at the start of remote control, for example.

### (Variation 1 of Embodiment 5)

Hereinafter, a delay detection method and so on according to the present variation will be described with reference to FIG. 23. FIG. 23 is a sequence diagram illustrating operations (the delay detection method) of remote control system 1 according to the present variation. The present variation describes an example of determining whether remote operation is being performed by terminal 30 that has sent a switching signal (e.g., an operation start signal as illustrated in FIG. 9) for switching from self-driving to remotely operated driving. It is to be noted that the following description focuses on differences from FIG. 22.

As illustrated in FIG. 23, to switch to remote operation, the operator provides, to input device 40, an input that indicates switching to remote operation. Remote operation switcher 35 in terminal 30 obtains (e.g., receives), from input device 40, a switching signal that indicates switching to remote operation (S141).

In response to the switching signal received by remote operation switcher 35, encryptor 36 generates an encryption key and a decryption key (S142). Encryptor 36 generates a pair of an encryption key and a decryption key.

Next, remote operation switcher 35 transfers the switching signal and the decryption key to mobile body 10 (S143).

Next, decryptor 18a in mobile body 10 receives and holds the decryption key (S144).

Next, operation signal receiver 11c receives the switching signal and starts receiving operation signals from terminal 30 (S145). That is, mobile body 10 is remotely operated.

Encryptor 36 in terminal 30 encrypts, using the encryption key generated at step S142, the operation signal with time A and electronic signature information "a" added thereto (S146). Operation signal transmitter 32 transfers the encrypted operation signal (S17).

Decryptor 18a in mobile body 10 receives the encrypted operation signal and decrypts the operation signal using the latest decryption key held (S147). If the decryption succeeds, time A and electronic signature information "a" can be extracted from the operation signal.

Thus, of the pair of the encryption key and the decryption key generated by terminal 30 that has transmitted the switching signal, the encryption key is held by terminal 30 and the decryption key is held by mobile body 10. It is then checked whether the operation signal encrypted and transmitted by terminal 30 can be decrypted using the decryption key held in mobile body 10. This can confirm whether terminal 30 that has transmitted the switching signal is remotely operating mobile body 10, i.e., whether the received operation signal is from terminal 30 that has transmitted the switching signal.

### (Variation 2 of Embodiment 5)

Hereinafter, a delay detection method and so on according to the present variation will be described with reference to FIG. 24. FIG. 24 is a sequence diagram illustrating operations (the delay detection method) of remote control system 1 according to the present variation. The present variation describes an example in which mobile body 10 ensures security of remote control system 1, and specifically, mobile body 10 confirms that operation signals from terminal 30 have not been tampered with.

As illustrated in FIG. 24, during remote operation by terminal 30, vehicle encryptor 18b generates two pairs of encryption keys and decryption keys (S151) and holds decryption keys I and II (S152). In the example in FIG. 24, vehicle encryptor 18b generates encryption keys I and II and decryption keys I and II. One of the pairs consists of encryption key I and decryption key I, and the other consists of encryption key II and decryption key II.

Next, vehicle encryptor 18b encrypts the mobile body information obtainment time (time A) using encryption key I (S153).

Next, mobile body information obtainer 11a adds the encrypted time (time A) to the mobile body information (S154) and further adds encryption key II to the mobile body information (S155).

Mobile body information receiver 31a in terminal 30 receives the mobile body information, and obtains and holds encrypted time A and encryption key II (S156).

Operation signal transmitter 32 adds encrypted time A obtained at step S156 to the operation signal (S157).

Next, encryptor 36 encrypts the operation signal using encryption key II (S158). Operation signal transmitter 32 transfers the encrypted operation signal (S17).

Next, decryptor 18a in mobile body 10 decrypts the operation signal using decryption key II held (S159).

If the decryption succeeds, operation signal receiver 11c extracts time A from the operation signal (S160). At this point, time A is still encrypted.

Next, verifier 16 decrypts encrypted time A using decryption key I (S161). If the decryption succeeds, time A can be obtained. MRM executer 14 executes MRM if the operation signal is delayed or if the decryption of time A fails (S20).

Thus, in the present variation, the time information to be added to the mobile body information is encrypted using encryption key I generated by mobile body 10, and further the operation signal to be transmitted from terminal 30 is encrypted using encryption key II generated by mobile body 10. This allows mobile body 10 to confirm that the operation signal transmitted from terminal 30 corresponds to an operation performed by the operator looking at a video transmitted by that mobile body 10, and that the operation signal has not been tampered with.

### [Embodiment 6]

Hereinafter, a delay detection method and so on according to the present embodiment will be described with reference to FIG. 25. FIG. 25 is a sequence diagram illustrating operations (the delay detection method) of remote control system 1 according to the present embodiment. The present embodiment describes an example in which mobile body 10 determines whether data is transmitted and received in order.

As illustrated in FIG. 25, adder 15 in mobile body 10 adds a counter to the mobile body information (S171) and increments the counter (S172). At step S172, adder 15 increments the counter by one. The counter incremented by one will be added to mobile body information to be obtained next. The counter added to the mobile body information is an example of first counter information.

Mobile body information receiver 31a in terminal 30 receives the mobile body information and holds time A and the counter obtained from the received mobile body information (S173). Further, operation signal transmitter 32 adds time A and the counter held at step S173 to the operation signal (S174).

Operation signal receiver 11c receives the operation signal and extracts time A and the counter (S175). The counter in the operation signal is an example of second counter information.

Next, verifier 16 verifies the counter in the operation signal (S176). This is verification for determining whether multiple operation signals are received in order. If the counter extracted at step S175 is smaller than the counter held, verifier 16 determines the wrong order (reception order) of the operation signals, i.e., the occurrence of an operation signal delay. If the operation signals are out of order, MRM is executed. The counter held may be the counter added to the immediately preceding operation signal, for example.

### [Embodiment 7]

Hereinafter, a delay detection method and so on according to the present embodiment will be described with reference to FIG. 26. FIG. 26 is a sequence diagram illustrating operations (the delay detection method) of remote control system 1 according to the present embodiment. The present embodiment describes an example in which mobile body 10 terminates MRM upon recovering from a delay state.

During the execution of MRM in mobile body 10, MRM executer 14 determines whether the delay is not greater than a specified value, and if the delay is not greater than the specified value (if the delay is resolved), terminates MRM being executed (S181). In other words, MRM executer 14 terminates the execution of MRM if the delay is resolved during the execution of MRM.

Thus, mobile body 10 determines whether to terminate MRM being executed and, if determining to terminate MRM being executed, automatically returns to self-driving mode.

### [Embodiment 8]

Hereinafter, a delay detection method and so on according to the present embodiment will be described with reference to FIG. 27. FIG. 27 is a sequence diagram illustrating operations (the delay detection method) of remote control system 1 according to the present embodiment. The present embodiment describes an example in which supervision server 20 relays mobile body information and operation signals.

As illustrated in FIG. 27, mobile body information transmitter 11b transfers the mobile body information to supervision server 20 (S12a), and mobile body information transferer 22 in supervision server 20 transfers the mobile body information to terminal 30 (S12b). Further, operation signal transmitter 32 transmits the operation signal to supervision server 20 (S17a), and operation signal transferer 23 in supervision server 20 transfers the operation signal to mobile body 10 (S17b).

If the operation signal is delayed, MRM executer 14 executes MRM (S20) and transmits, to supervision server 20, MRM information indicating that MRM has been executed (S191).

In response to the reception of the MRM information, supervision state manager 21 in supervision server 20 shuts down an operation signal transmission system (S192). Supervision state manager 21 thus prohibits the relaying of operation signals from terminal 30 to mobile body 10 if the operation signal is delayed.

Thus, supervision server 20 that relays and manages information exchange between mobile body 10 and terminal 30 blocks operation signals from terminal 30 in response to the execution of MRM in mobile body 10.

### [Embodiment 9]

Hereinafter, a delay detection method and so on according to the present embodiment will be described with reference to FIGS. 28 to 29B. FIG. 28 is a sequence diagram illustrating operations (the delay detection method) of remote control system 1 according to the present embodiment. The present embodiment describes an example in which the delay determination of an operation signal is statistically processed.

As illustrated in FIG. 28, delay determiner 12 uses statistical processing to determine whether the operation signal is delayed (S201). For example, delay determiner 12 statistically processes the sum of "the delay from when the mobile body information is obtained from mobile body 10 to when the mobile body information is presented to the operator" and "the delay from when the operator performs the operation to when the operation is reflected in mobile body 10". If the value resulting from the statistical processing does not satisfy a predetermined condition, MRM executer 14 executes MRM (S20).

Here, specific examples of the processing at step S201 will be described with reference to FIGS. 29A and 29B. FIGS. 29A and 29B are flowcharts illustrating examples of operations (the delay detection method) of remote control system 1 according to the present embodiment.

As illustrated in FIG. 29A, delay determiner 12 obtains the mobile body information obtainment time from the received operation signal and calculates a delay (S211).

Next, delay determiner 12 counts delay times longer than 1.5 seconds among the past N delay times (S212). The length of time 1.5 seconds is an example of a predetermined length of time. It is to be noted that the predetermined length of time is not limited to 1.5 seconds and may be any other value.

Next, delay determiner 12 determines whether the number of delay times is N or more (S213), and if so (yes at S213), determines that a delay has occurred (S214); otherwise (no at S213), no delay has occurred and the process terminates.

Thus, the statistical processing may include calculating the number of detected delays longer than a predetermined length of time.

As illustrated in FIG. 29B, after step S211, delay determiner 12 averages the past five delay times (S215). That is, delay determiner 12 calculates the average of the delay times (an average delay). The number five is an example of a predetermined number. It is to be noted that the predetermined number is not limited to five and may be any other value.

Next, delay determiner 12 determines whether the average delay is greater than or equal to a specified value (S216), and if so (yes at S216), determines that a delay has occurred (S214); otherwise, (no at S216), no delay has occurred and the process terminates.

Thus, the statistical processing may include calculating the average of delay times in a predetermined time period. It is to be noted that this calculation is not limited to calculating the average and may be calculating some other value, for example, the mode or the median.

As above, any sudden irregular delay can be prevented from being identified as the occurrence of a delay. This can also reduce the processing amount of the delay determination in mobile body 10.

It is to be noted that the statistical processing may include calculating the variance of delay times in a predetermined time period. The variance of the delay times that is greater than or equal to a specified value means that certain operations may fail, leading to a lower operability of mobile body 10. Therefore, delay determiner 12 may determine an anomaly if the variance is greater than or equal to the specified value. If an anomaly is determined, MRM may be executed, for example. Delay determiner 12 may determine the variance instead of the determination at step S216, or may further determine the variance if, for example, the determination at step S216 results in no.

### [Embodiment 10]

Hereinafter, a delay detection method and so on according to the present embodiment will be described with reference to FIG. 30. FIG. 30 is a sequence diagram illustrating operations (the delay detection method) of remote control system 1 according to the present embodiment. The present embodiment describes an example in which an execution delay in mobile body 10 is taken into account.

As illustrated in FIG. 30, in response to the reception of the operation signal, operation signal executer 13 executes the operation signal (S221). Further, mobile body information obtainer 11a obtains mobile body information (S222). Based on the mobile body information obtained at step S222, delay determiner 12 calculates the time period required for the result of executing the operation signal to be reflected, and performs delay determination based on the calculated time period. For example, if the operation signal instructs to increase the rotation rate of the motor to a predetermined rate, the time period required for the rotation rate to reach the predetermined rate is calculated as a delay.

It is to be noted that the current time illustrated at step S19 may be, for example, the time at which it is observed that the operation according to the operation signal executed at step S221 is reflected in mobile body 10. If a delay has occurred, MRM executer 14 executes MRM (S20).

Thus, if the time period required for the observation that the operator's operation is reflected in mobile body 10 is longer than or equal to a certain length of time, MRM can be executed.

### [Embodiment 11]

Hereinafter, a delay detection method and so on according to the present embodiment will be described with reference to FIG. 31. FIG. 31 is a sequence diagram illustrating operations (the delay detection method) of remote control system 1 according to the present embodiment. The present embodiment describes a case in which the operator performs remote assistance. In remote assistance, control signals are one-time signals (not transmitted at regular intervals).

Steps S11 to S234 illustrated in FIG. 31 indicate processing performed while the operator (a remote operator) is looking at a video in order to operate buttons or other mechanisms.

In this state, no operation signal is received from input device 40; operation signal transmitter 32 therefore adds time A to a time signal (S231) and transfers the time signal to mobile body 10 (S232). The time signal includes a time (here, time A, which is an example of the second time information) to be used to determine whether a delay has occurred during the operator's remote assistance. The time signal does not include information for remotely controlling mobile body 10 (e.g., a control command).

Delay determiner 12 determines a time signal delay based on the received time signal (S233). Delay determiner 12 determines whether the time signal has delayed. Delay determiner 12 performs the determination at step S233 based on whether the value obtained by subtracting time A from the current time at which the time signal is received is greater than a specified value. If the value resulting from the subtraction is greater than the specified value, the occurrence of a delay is determined and MRM is executed (S234).

Thus, if a delay occurs while the video for remote assistance is being checked, MRM is executed.

Further, when operation signal receiver 31b in terminal 30 obtains a one-time operation signal (S15), operation signal transmitter 32 adds time A to the operation signal (S16) and transfers the operation signal to mobile body 10 (S17). In other words, the time of the obtainment of the video is transmitted to mobile body 10.

Operation signal executer 13 executes the operation signal (S235).

Next, delay determiner 12 determines a time signal delay (S236). For example, delay determiner 12 performs the determination at step S236 based on whether the value obtained by subtracting time A from the current time is greater than a specified value. If the value resulting from the subtraction is greater than the specified value, the occurrence of a delay is determined and MRM is executed (S20).

### [Embodiment 12]

Hereinafter, a delay detection method and so on according to the present embodiment will be described with reference to FIG. 32. FIG. 32 is a sequence diagram illustrating operations (the delay detection method) of remote control system 1 according to the present embodiment. The present embodiment describes a case in which the time in mobile body 10 is rolled back. In remote assistance, control signals are one-time signals (not transmitted at regular intervals).

As illustrated in FIG. 32, time manager 19 checks whether the internal time in mobile body 10 has been rolled back (S241).

If the internal time in mobile body 10 is determined to have been rolled back (i.e., the internal time deviates from a reference time (e.g., the GPS time)), MRM executer 14 executes MRM (S242). For example, MRM executer 14 determines whether the internal time of mobile body 10 has been rolled back a predetermined length of time or more. The predetermined length of time is preset.

### (Variation of Embodiment 12)

Hereinafter, a delay detection method and so on according to the present variation will be described with reference to FIG. 33. FIG. 33 is a sequence diagram illustrating operations (the delay detection method) of remote control system 1 according to the present variation. The present variation describes operations in a case where time manager 19 is an independent entity. In remote assistance, control signals are one-time signals (not transmitted at regular intervals).

As illustrated in FIG. 33, mobile body 10 obtains mobile body information (S251), and time manager 19 adds an obtainment time (time A) to the mobile body information (S252). Further, after step S18, time manager 19 provides the obtainment time (time A) to mobile body 10 (S253).

Further, time manager 19 checks whether the internal time has been rolled back (S255). For example, time manager 19 determines whether the internal time of mobile body 10 has been rolled back a predetermined length of time or more. The predetermined length of time is preset.

### (Other Embodiments)

Although a delay detection method, and so on, according to one or more aspects has been described above based on the foregoing embodiments, and so on, the present disclosure is not limited to the foregoing embodiments, and so on. Forms realized by various modifications to the embodiments conceived by a skilled person as well as forms realized by a combination of the constituent elements in different embodiments, so long as they do not depart from the essence of the present disclosure, may be included in the present disclosure.

For example, in the foregoing embodiments, and so on, the respective delay corrections may be executed by either one of mobile body 10 or terminal 30. For example, the respective delay corrections may be executed all together by mobile body 10, or may be executed all together by terminal 30. Furthermore, for example, the respective delay corrections may be performed by supervision server 20.

Furthermore, although, in the foregoing embodiments, and so on, an example in which remote control system 1 includes supervision server 20 is described, the present disclosure is not limited to such a configuration. For example, mobile body 10 and terminal 30 may be capable of direct communication that does not pass through supervision server 20, or mobile body 10 and terminal 30 may have the function of supervision server 20.

Furthermore, in the above embodiments, and so on, each the constituent elements may be implemented as dedicated hardware or may be realized by executing a software program suited to such constituent element. Alternatively, the constituent elements may be implemented by a program executor such as a CPU or a processor reading out and executing the software program recorded in a recording medium such as a hard disk or a semiconductor memory.

Furthermore, the processing order of executing the steps shown in the flowcharts is a mere illustration for specifically describing the present disclosure, and thus may be an order other than the order shown. Also, one or more of the steps may be executed simultaneously (in parallel) with another step, or one or more of the steps need not necessarily have to be executed.

Moreover, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Furthermore, the delay detection system included in mobile body 10 or terminal 30 according to the foregoing embodiments, and so on, may be implemented as a single device or may be implemented by a plurality of devices. When the delay detection system or terminal 30 is implemented by a plurality of devices, each of the constituent elements included in the delay detection system or terminal 30 may be distributed to the plurality of devices in any manner. When the delay detection system or terminal 30 is implemented by a plurality of devices, the method of communication between the plurality of devices is not particularly limited, and may be wireless communication or wired communication. Furthermore, a combination of wireless and wired communication may be used between the devices.

Furthermore, each of the constituent elements described in the foregoing embodiments, and so on, may be implemented as software, and may typically be implemented as a large-scale integration (LSI) circuit, which is an integrated circuit (IC). The constituent elements may be implemented by individual chips, or some or all of the components may be implemented by a single chip. Although the integrated circuit implementing these constituent elements is referred to as an LSI here, the integrated circuit may be referred to as an IC, a system LSI, a super LSI, or an ultra LSI depending on the scale of integration. Moreover, a method of implementation of the constituent elements using an integrated circuit is not limited to application of an LSI. The elements may be implemented by a dedicated circuit (a general-general purpose circuit executing a dedicated program) or a general-purpose processor. It is also possible to use a field programmable gate array (FPGA) that can be programmed after being manufactured, or a reconfigurable processor in which connection and setting of circuit cells in an LSI can be reconfigured. Furthermore, when a circuit integration technology that replaces LSIs comes along owing to advances of the semiconductor technology or to a separate derivative technology, the constituent elements may understandably be integrated using that technology.

The system LSI is a super multifunctional LSI manufactured by integrating a plurality of processing units onto a single chip. More specifically, the system LSI is a computer system configured with a microprocessor, a ROM, a RAM, and so on. The ROM stores a computer program. The microprocessor operates according to the computer program so that a function of the system LSI is achieved.

Furthermore, one aspect of the present disclosure may be a computer program for causing a computer to execute each of the characteristic steps included in the delay detection method illustrated in any one of FIG. 4 to FIG. 6E, FIG. 12 to FIG. 15A, FIG. 16, FIG. 19A, FIG. 19B, and FIG. 21A to FIG. 33.

Moreover, for example, an aspect of the present disclosure may be a non-transitory computer-readable recording medium having recorded thereon such a program. For example, such a program may be distributed or circulated by being recorded on the recording medium. For example, by installing the distributed program into another device that includes a processor, and causing the processor to execute the program, it is possible to cause the device to perform the above-described processes.

### [Industrial Applicability]

The present disclosure is useful to a remote control system, and the like, for performing remote control of a mobile body.

### [Reference Signs List]

1 remote control system
10 mobile body
11a mobile body information obtainer
11b mobile body information transmitter (transmitter)
11c operation signal receiver (receiver)
12 delay determiner (determiner)
13 operation signal executer
14 MRM executer
15 adder
16 verifier
17a mobile body information obtainment delay corrector
17b operation signal execution delay corrector
18a decryptor
18b vehicle encryptor
19 time manager
20 supervision server
21 supervision state manager
22 mobile body information transferer
23 operation signal transferer
30 terminal
31a mobile body information receiver
31b operation signal receiver
32 operation signal transmitter
33a mobile body information displayer
33b delay time displayer
34a display delay corrector
34b operation signal obtainment delay corrector
34c operator response delay corrector
35 remote operation switcher
36 encryptor
40 input device
a electronic signature information
A, T time
N mobile body information transfer system
t1 display delay
t2 response delay
t3 signal obtainment delay

## Claims

1. A delay detection method to be executed by a mobile body that is remotely controllable by an operator, the delay detection method comprising:
adding first time information to mobile body information indicating a state of the mobile body, and transmitting, to a terminal of the operator, the mobile body information to which the first time information has been attached;
receiving an operation signal that is based on an operation performed by the operator on the mobile body in response to the mobile body information, the operation signal including second time information that is based on the first time information included in the mobile body information; and
detecting a delay in a remote control system including the mobile body and the terminal, based on the second time information and a predetermined time.

2. The delay detection method according to claim 1, wherein
the predetermined time is a current time,
in the detecting of the delay, a difference between the second time information and the current time is calculated, and the delay is detected based on the difference calculated.

3. The delay detection method according to claim 2, wherein
in the detecting of the delay, the difference between the second time information included in the operation signal received most recently and the current time is calculated regularly.

4. The delay detection method according to claim 1, comprising:
causing the mobile body to execute a predetermined operation, when the delay is detected.

5. The delay detection method according to claim 1, comprising:
causing the mobile body to execute a predetermined operation, when an internal time of the mobile body is rolled back a predetermined length of time or more.

6. The delay detection method according to claim 4 or 5, wherein
the causing the mobile body to execute the predetermined operation includes causing the mobile body to execute a minimal risk maneuver (MRM).

7. The delay detection method according to claim 4 or 5, wherein
the operation signal includes a control command that is based on the operation by the operator, and
the predetermined operation includes ignoring the control command included in the operation signal received.

8. The delay detection method according to claim 1, wherein
the first time information includes a time obtained by correcting a time at which predetermined information included in the mobile body information is obtained, the correcting being based on a time period up to when the predetermined information is obtained.

9. The delay detection method according to claim 1 or 8, wherein
the second time includes a time obtained by correcting the first time information, based on a time period from when the mobile body information is received by the terminal to when the mobile body information is displayed by the terminal.

10. The delay detection method according to claim 1 or 8, wherein
the second time information is corrected based on a time period from when the operation signal is received by the mobile body to when control according to the operation signal is completed by the mobile body, and the delay in the remote control system is detected based on the second time information corrected and the predetermined time.

11. The delay detection method according to any one of claims 1 to 5, wherein
first signature information is further added to the mobile body information, and the mobile body information to which the first signature information has been added is transmitted to the terminal of the operator,
the operation signal further including second signature information is received, and
the delay detection method further comprises:
performing verification of the second signature information, based on the first signature information.

12. The delay detection method according to claim 11, wherein
the second signature information is information that is transmitted from the terminal at a start of remote control.

13. The delay detection method according to any one of claims 1 to 5, wherein
first counter information is further added to the mobile body information, and the mobile body information to which the first counter information has been added is transmitted to the terminal of the operator,
the operation signal further including second counter information is received, and
the delay detection method further comprises:
performing verification of the second counter information.

14. The delay detection method according to claim 6, further comprising:
terminating execution of the MRM, when the delay is resolved during the execution of the MRM.

15. The delay detection method according to any one of claims 1 to 5, further comprising:
receiving a time signal including the second time information, from the terminal, when the operator does not perform remote control on the mobile body.

16. The delay detection method according to claim 1, wherein
the first time information is encrypted using a first encryption key, the first time information encrypted is added to the mobile body information, and the mobile body information to which the first time information encrypted has been added is transmitted to the terminal, and
the delay detection method further comprises:
decrypting the second time information included in the operation signal, using a first decryption key corresponding to the first encryption key.

17. The delay detection method according to claim 1 or 16, wherein
a second encryption key is added to the mobile body information, and the mobile body information to which the second encryption key has been added is transmitted to the terminal,
the operation signal that has been encrypted using the second encryption key is received, and
the delay detection method further comprises:
decrypting the operation signal received, using a second decryption key corresponding to the second encryption key.

18. The delay detection method according to any one of claims 1 to 5, wherein
a time indicated by the first time information and a time indicated by the second time information are a same time.

19. A delay detection device included in a mobile body that is remotely controllable by an operator, the delay detection device comprising:
a transmitter that adds first time information to mobile body information indicating a state of the mobile body, and transmits, to a terminal of the operator, the mobile body information to which the first time information has been attached;
a receiver that receives an operation signal that is based on an operation performed by the operator on the mobile body in response to the mobile body information, the operation signal including second time information that is based on the first time information included in the mobile body information; and
a determiner that detects a delay in a remote control system including the mobile body and the terminal, based on the second time information and a predetermined time.

20. A program for causing a computer to execute the delay detection method according to any one of claims 1 to 5, 8, and 16.
